# EUROPEAN PATENT APPLICATION

(11) **EP 4 664 992 A1**
(43) Date of publication of application: **17.12.2025**
(21) Application number: 24756080.8
(22) Date of filing: 04.02.2024
(51) Int. Cl.: H04W 36/00

(54) **METHOD AND APPARATUS FOR COMMUNICATION, AND STORAGE MEDIUM AND PROGRAM PRODUCT**

(30) Priority: 17.02.2023 CN 202310185424
(71) Applicant: Huawei Technologies Co., Ltd., Shenzhen, Guangdong 518129 (CN)
(72) Inventor: HAN, Feng, Shenzhen, Guangdong 518129 (CN); MA, Chuan, Shenzhen, Guangdong 518129 (CN); HU, Jinna, Shenzhen, Guangdong 518129 (CN); ZHENG, Lili, Shenzhen, Guangdong 518129 (CN)
(74) Representative: Pfenning, Meinig & Partner mbB
(86) International application number: PCT/CN2024/075848
(87) International publication number: WO 2024/169706

(57) **Abstract**

A communication method and apparatus, a computer-readable storage medium, and a computer program product are provided. The method is used by a first network device to send, to a second network device, a request message for conditional handover, and receive, from the second network device, a response message for conditional handover. The response message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

## Description

### TECHNICAL FIELD

This disclosure generally relates to the telecommunication field, and more specifically, to a communication method and apparatus, a computer-readable storage medium, and a computer program product.

### BACKGROUND

With application and popularization of 5G in various industries, 5G technologies increasingly need to process more advanced services and applications, for example, applications with high bandwidth requirements. 5G networks are also becoming denser, using more antennas, larger bandwidths, and more frequency bands. Energy consumption of 5G systems, for example, energy consumption of active antenna units (Active Array Unit, AAU) of radio access networks (Radio Access Network, RAN), is increasingly high. Therefore, how to perform network energy saving in the 5G systems becomes one of main research in the industry.

### SUMMARY

This disclosure provides a solution for using an energy saving mode during conditional handover, to use the energy saving mode during handover between network devices such as base stations, so as to reduce network energy consumption and improve energy utilization efficiency.

According to a first aspect, a communication method is provided. The method may be performed by a first network device, or may be performed by a chip used in the first network device. The following uses an example in which the method is performed by the first network device for description. In the method, a first network device sends, to a second network device, a request message for conditional handover. Further, the first network device receives, from the second network device, a response message for conditional handover. The response message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

In some implementations, the request message indicates that conditional handover is network energy saving triggered conditional handover. Therefore, conditional handover is triggered by network energy saving, network energy saving is implemented, and energy utilization efficiency is improved.

In some implementations, the energy saving mode includes cell discontinuous transmission DTX. The energy saving mode may also include cell discontinuous reception DRX. The energy saving mode may also include an energy saving state. The energy saving mode may also include a cell load state. In this way, the energy saving mode may be represented in a plurality of manners, to implement energy saving-based conditional handover for different scenarios or application requirements.

In some implementations, after receiving the response message, the first network device further sends a reconfiguration message to the terminal device, where the reconfiguration message includes the indication information. In this way, the network configures for the terminal, enabling the terminal to autonomously implement conditional handover based on network energy saving. In addition, this avoids the base station triggering a handover procedure for each terminal device when the base station enters or changes the energy saving state, thereby avoiding signaling overheads and signaling storms.

In some implementations, the reconfiguration message includes identification information of a first energy saving mode of a source cell of the first network device. The reconfiguration message may further include identification information of a second energy saving mode of the candidate cell of the second network device. The reconfiguration message may further include a conditional execution condition associated with the first energy saving mode and the second energy saving mode. The reconfiguration message may further include configuration information associated with the conditional execution condition. In this way, the configuration information associated with a cell energy saving mode of the source base station, a cell energy saving mode of a candidate base station of a handover target, a conditional handover execution condition, and the conditional execution condition may be completely configured for the terminal, so that the terminal autonomously implements conditional handover based on network energy saving.

In some implementations, the reconfiguration message includes identification information of an energy saving mode of a cell of the first network device. The reconfiguration message may further include the conditional execution condition associated with the first energy saving mode. The reconfiguration message may further include the configuration information associated with the conditional execution condition. In this way, the configuration information associated with the cell energy saving mode of the source base station, the execution condition of the conditional handover, and the conditional execution condition may be completely configured for the terminal, enabling the terminal to autonomously implement conditional handover based on network energy saving under a condition of a current cell energy saving mode of the destination base station. In addition, this avoids the base station triggering a handover procedure for each terminal device when the base station enters or changes the energy saving state, thereby avoiding signaling overheads and signaling storms.

In some implementations, the first network device further receives, from the second network device, an indication of the second energy saving mode for the candidate cell of the second network device. The first network device further sends the indication of the second energy saving mode for the candidate cell of the second network device to the terminal device. In this way, the source base station may notify the terminal device of a state of the candidate base station cell in time, to implement real-time energy saving-based conditional handover and adaptation, thereby facilitating network energy saving. In addition, the conditional handover execution condition can be flexibly indicated, and the terminal device can dynamically perform conditional handover evaluation. This avoids possible handover failures, effectively improves handover performance of the terminal device, and finally ensures energy saving effect of the base station.

In some implementations, the first network device sends the indication of the second energy saving mode to the terminal device by using a media access control MAC control element CE, where the MAC CE indicates a candidate cell and a corresponding energy saving mode. The first network device further sends the indication of the second energy saving mode to the terminal device by using layer 1 signaling, where the layer 1 signaling indicates a candidate cell and a corresponding energy saving mode. In this way, the source base station can more quickly notify the terminal device of the state of the candidate base station cell in time, to implement real-time energy saving-based conditional handover and adaptation, thereby facilitating network energy saving. In addition, the conditional handover execution condition can be flexibly indicated, and the terminal device can dynamically perform conditional handover evaluation. This avoids possible handover failures, effectively improves handover performance of the terminal device, and finally ensures energy saving effect of the base station.

In some implementations, the first network device sends the indication information of the energy saving mode to the terminal device, where the indication information indicates to suspend, delete, or resume configuration information for conditional handover. In this way, configuration information for conditional handover not to be used recently can be shielded, thereby improving accuracy of conditional handover.

In some implementations, when an energy saving mode of the first network device changes, the first network device sends indication information of the energy saving mode to the terminal device. When an energy saving mode of the second network device changes, the first network device also sends indication information of the energy saving mode to the terminal device. In this way, the terminal device may be notified of an energy saving mode change of the source base station cell and the candidate base station cell in real time, so that the terminal can accurately implement energy saving conditional handover. In addition, the conditional handover execution condition can be flexibly indicated, and the terminal device can dynamically perform conditional handover evaluation. This avoids possible handover failures, effectively improves handover performance of the terminal device, and finally ensures energy saving effect of the base station.

In some implementations, the indication information includes an identifier index of conditional reconfiguration. The indication information further includes an indication for suspending or deleting conditional reconfiguration. The indication information further includes an indication of continuing to measure the at least one candidate cell associated with conditional reconfiguration without triggering conditional handover. In this way, configuration information corresponding to an energy saving mode not to be used recently can be accurately shielded, thereby improving accuracy of conditional handover.

In some implementations, the indication information includes an identifier of at least one energy saving mode of a cell of the first network device. The indication information further includes an identifier of at least one energy saving mode of a cell of the second network device. The indication information further includes an indication for suspending or deleting conditional reconfiguration. The indication information further includes an indication of continuing to measure the at least one candidate cell associated with conditional reconfiguration without triggering conditional handover. The indication information further includes an identifier of at least one candidate cell of the second network device. In this way, configuration information corresponding to an energy saving mode not to be used recently is accurately shielded, thereby improving accuracy of conditional handover.

In some implementations, the indication information of the energy saving mode is sent by using a MAC CE. The indication information of the energy saving mode may alternatively be sent by using a combination of layer 1 signaling and an RRC reconfiguration message. In this way, the indication information is sent by using flexible layer 1 and layer 2 signaling, thereby improving efficiency and real-time performance.

In some implementations, the first network device sends, to the terminal device, an indication used in the following cases: resuming measurement of a cell associated with conditional reconfiguration, and triggering the conditional handover when a conditional handover condition is met. In this way, conditional handover of the cell is accurately restored.

In some implementations, the first network device sends configuration information to the terminal device. The configuration information is used to configure the terminal device to select a candidate cell that is not in an energy saving mode as a target cell for conditional handover when determining that a plurality of candidate cells meet a conditional handover condition. This can avoid using a cell in the energy saving mode as a target cell as much as possible, and improve handover reliability.

According to a second aspect, a communication method is provided. The method may be performed by a second network device, or may be performed by a chip used in the second network device. The following provides descriptions by using an example in which an execution body is the second network device. In the method, the second network device receives, from a first network device, a request message for conditional handover. Further, the second network device sends, to the first network device, a response message for conditional handover. The response message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

In some implementations, the request message indicates that conditional handover is network energy saving triggered conditional handover. Therefore, conditional handover is triggered by network energy saving, network energy saving is implemented, and energy utilization efficiency is improved.

In some implementations, the energy saving mode includes discontinuous transmission DTX. The energy saving mode further includes discontinuous reception DRX. The energy saving mode further includes an energy saving state. The energy saving mode further includes a cell load state. In this way, the energy saving mode may be represented in a plurality of manners, to implement energy saving-based conditional handover for different scenarios or application requirements.

In some implementations, the second network device is a distributed unit of a base station. The distributed unit receives a terminal context setup request message from a central unit of the base station, where the terminal context setup request message includes the indication information. The distributed unit sends a terminal context setup response message to the central unit, where the terminal context setup response message includes an energy saving mode of at least one cell of the second network device and a distributed unit configuration corresponding to the energy saving mode of the cell of the second network device. In this way, the central unit and the distributed unit are adapted to implement a structure of a base station, to implement conditional handover for network energy saving.

In some implementations, the distributed unit configuration includes a cell group configuration. In this way, the energy saving mode of the distributed unit is flexibly configured.

In some implementations, the terminal context setup response message further includes an energy saving mode index of the cell of the second network device. In this way, the energy saving mode of the distributed unit is flexibly configured.

In some implementations, the second network device further sends, to the first network device based on the terminal context setup response message, a response message for conditional handover. In this way, the energy saving mode of the distributed unit of the candidate base station is sent to a source base station, so that the energy saving mode is sent to the terminal device, to implement energy saving conditional handover.

In some implementations, the response message for conditional handover includes the energy saving mode of at least one cell of the second network device and configuration information configured for the distributed unit, and the configuration information is sent to the terminal device. In this way, the energy saving mode of the distributed unit of the candidate base station is sent to the source base station, so that the energy saving mode is sent to the terminal device, to implement energy saving conditional handover.

According to a third aspect, a communication method is provided. The method may be performed by a terminal device or a chip used in the terminal device. The following uses an example in which the method is performed by the terminal device for description. In the method, the terminal device receives a reconfiguration message from a first network device. Further, the terminal device performs, based on the reconfiguration information, conditional handover based on an energy saving mode. The reconfiguration message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved. In addition, the conditional handover execution condition can be flexibly indicated, and the terminal device can dynamically perform conditional handover evaluation. This avoids possible handover failures, effectively improves handover performance of the terminal device, and finally ensures energy saving effect of the base station.

In some implementations, the reconfiguration message includes an identifier of a first energy saving mode of a source cell of the first network device. The reconfiguration message further includes an identifier of a second energy saving mode of a candidate cell of the second network device. The reconfiguration message further includes the first energy saving mode. The reconfiguration message further includes a conditional execution condition associated with the second energy saving mode. The reconfiguration message also includes conditional reconfiguration associated with the conditional execution condition. In this way, the energy saving modes of the source cell and the candidate cell are completely represented, so that the terminal can accurately implement energy saving conditional handover. In addition, the conditional handover execution condition can be flexibly indicated, and the terminal device can dynamically perform conditional handover evaluation. This avoids possible handover failures, effectively improves handover performance of the terminal device, and finally ensures energy saving effect of the base station.

In some implementations, the terminal device further receives indication information of an energy saving mode from the first network device, where the indication information indicates to suspend, delete, or resume configuration information for conditional handover. In this way, the energy saving mode can be flexibly enabled or disabled, and conditional handover of the energy saving mode can be accurately implemented.

In some implementations, the terminal device further suspends conditional reconfiguration based on at least one of the first network device and the second network device entering the energy saving mode. The terminal device further resumes conditional reconfiguration based on at least one of the first network device and the second network device exiting the energy saving mode. In this way, the energy saving mode can be flexibly enabled or disabled, and conditional handover of the energy saving mode can be accurately implemented.

In some implementations, the terminal device selects, based on determination of a plurality of candidate target cells meeting a conditional handover condition, a candidate cell not in the energy saving mode as a target cell for conditional handover. In this way, a success rate of conditional handover is improved, and reliability is improved.

According to a fourth aspect, a first communication apparatus is provided, including a sending module, configured to send, to a second communication apparatus, a request message for conditional handover. The first communication apparatus further includes a receiving module, configured to receive, from the second communication apparatus, a response message for the conditional handover, where the response message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

According to a fifth aspect, a second communication apparatus is provided. The second communication apparatus includes a receiving module, configured to receive, from a first communication apparatus, a request message for conditional handover. The second communication apparatus further includes a sending module, configured to send, to the first network device, a response message for conditional handover. The response message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

According to a sixth aspect, a terminal apparatus is provided, including a receiving module, configured to receive a reconfiguration message from a first network device. The terminal apparatus further includes a conditional handover module, configured to perform, for the terminal device based on the reconfiguration information, conditional handover based on an energy saving mode. The reconfiguration message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

According to a seventh aspect, this disclosure provides a computer-readable storage medium. The computer-readable storage medium stores a computer program. When the computer program is run, the methods performed by a remote communication apparatus, a relay terminal apparatus, a terminal apparatus, and a network device in the foregoing aspects are implemented.

According to an eighth aspect, a computer program product is provided, where the computer program product includes computer program code. When the computer program code is run, the methods performed by a remote communication apparatus, a relay terminal apparatus, a terminal apparatus, and a network device in the foregoing aspects are performed.

### BRIEF DESCRIPTION OF DRAWINGS

FIG. 1A is a communication scenario in which embodiments of this disclosure may be implemented;
FIG. 1B is a diagram of discontinuous transmission of a cell and discontinuous reception of a terminal according to an embodiment of this disclosure;
FIG. 1C-1 and FIG 1C-2 are a schematic flowchart of conditional handover according to an embodiment of this disclosure;
FIG. 1D is a diagram of a base station having a CD/DU architecture according to an embodiment of this disclosure;
FIG. 2A is a schematic flowchart of using a network energy saving mode in conditional handover according to an embodiment of this disclosure;
FIG. 2B is a diagram of a conditional handover indication triggered by network energy saving according to an embodiment of this disclosure;
FIG. 3 is a diagram of performing conditional reconfiguration on a terminal by a base station according to an embodiment of this disclosure;
FIG. 4 is a diagram of performing conditional reconfiguration on a terminal by a base station according to another embodiment of this disclosure;
FIG. 5 is a diagram of signaling that indicates energy saving modes by using a MAC CE according to an embodiment of this disclosure;
FIG. 6 is a diagram of signaling that indicates energy saving modes by using a MAC CE according to another embodiment of this disclosure;
FIG. 7 is a diagram of signaling that indicates energy saving modes by using a MAC CE according to still another embodiment of this disclosure;
FIG. 8 is a schematic flowchart of reporting conditional handover of a network energy saving mode of a terminal according to an embodiment of this disclosure;
FIG. 9 is a flowchart of a communication method implemented at a first network device according to an embodiment of this disclosure;
FIG. 10 is a flowchart of a communication method implemented at a second network device according to an embodiment of this disclosure;
FIG. 11 is a flowchart of a communication method implemented at a terminal device according to an embodiment of this disclosure;
FIG. 12 is a simplified block diagram of an example device in a possible implementation according to an embodiment of this disclosure; and
FIG. 13 is a simplified block diagram of a communication apparatus in a possible implementation according to an embodiment of this disclosure.

### DESCRIPTION OF EMBODIMENTS

To make objectives, technical solutions, and advantages of this disclosure clearer, the following further describes this disclosure in detail with reference to accompanying drawings. Specific operation methods, function descriptions, and the like in method embodiments may also be applied to apparatus embodiments or system embodiments.

With application of 5G in various industries and popularization of 5G in various geographical areas, 5G technologies increasingly need to process more advanced services and applications, for example, high-bandwidth XR applications, including augmented reality (Augmented Reality, AR), virtual reality (Virtual Reality, VR), and mixed reality (Mixed Reality, MR). In addition, 5G networks are also becoming denser, using more antennas, larger bandwidths, and more frequency bands. In environments, how to perform network energy saving in the 5G system becomes one of main research in the industry.

Currently, most energy consumption in the 5G system comes from a radio access network (Radio Access Network, RAN), especially an active antenna unit (Active Antenna Unit, AAU). Currently, power consumption of a wireless access device may be divided into two parts: a dynamic part, which is consumed only when data transmission/reception is performed; and a static part, which is always consumed even if data transmission/reception is not performed. Therefore, it is necessary to introduce a base station energy saving technology into an air interface technology without affecting user performance.

In view of this, embodiments of this disclosure provide a communication method of using an energy saving mode in conditional handover. In the method, a first network device sends, to a second network device, a request message for conditional handover. Further, the first network device receives, from the second network device, a response message for conditional handover. The response message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

Embodiments disclosed in this application further provide a communication method of using an energy saving mode in conditional handover. In the method, the second network device receives, from a first network device, a request message for conditional handover. Further, the second network device sends, to the first network device, a response message for conditional handover. The response message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved.

An embodiment of this disclosure further provides a communication method of using an energy saving mode in conditional handover. In the method, a terminal device receives a reconfiguration message from a first network device. Further, the terminal device performs, based on the reconfiguration information, conditional handover based on an energy saving mode. The reconfiguration message includes indication information, and the indication information indicates at least one energy saving mode of a candidate cell of the second network device and at least one piece of configuration information associated with the at least one energy saving mode for conditional handover. In this way, network energy saving triggered conditional handover is implemented, and energy utilization efficiency is improved. In addition, the conditional handover execution condition can be flexibly indicated, and the terminal device can dynamically perform conditional handover evaluation. This avoids possible handover failures, effectively improves handover performance of the terminal device, and finally ensures energy saving effect of the base station.

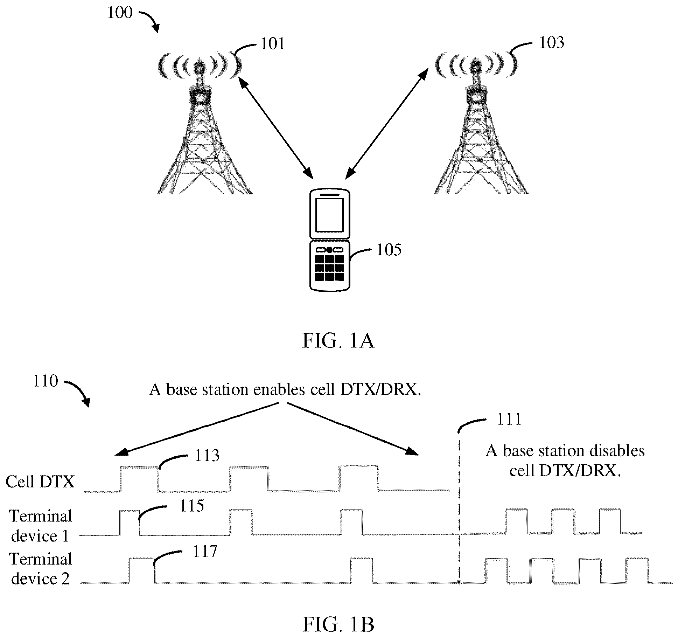

FIG. 1A is a communication scenario in which embodiments of this disclosure may be implemented. Specifically, a scenario 100 shows a scenario in which a terminal device 105 is handed over between, for example, a first network device 101 of a base station and a second network device 103 of the base station. The terminal device 105 may maintain a connection to the first network device 101, and a handover execution condition is preconfigured by a network. When the handover execution condition is met, the terminal device 105 is handed over from the first network device 101 to the second network device 103.

The terminal device 105 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, terminal device, or the like. The terminal device 105 may alternatively be a communication chip having a communication module, or may be a vehicle having a communication function, or a vehicle-mounted device (for example, an in-vehicle communication apparatus or an in-vehicle communication chip), or the like. The terminal device 105 may have a wireless transceiver function, and can communicate (for example, perform wireless communication) with one or more network devices in one or more communication systems, and accept a network service provided by the network device. The network device herein includes but is not limited to the first network device 101 and the second network device 103 shown in the figure.

The terminal device 105 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device, a terminal apparatus in a 5G network, a terminal apparatus in a future evolved PLMN network, or the like, or may be a terminal apparatus in a future 6G or higher network standard.

The terminal device 105 may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the first network device 101, the second network device 103, and the terminal device 105 may be deployed on land, including an indoor device, an outdoor device, a handheld device, or a vehicle-mounted device. The first network device 101, the second network device 103, and the terminal device 105 may also be deployed on water (for example, on a ship). The first network device 101, the second network device 103, and the terminal device 105 may alternatively be deployed in the air (for example, on an airplane, a balloon, or a satellite).

The first network device 101 and the second network device 103 may be access network devices (or referred to as access network stations). The access network device is a device that provides a network access function, for example, a radio access network (radio access network, RAN) or a base station. The network device (101) may specifically include a base station (base station, BS), or include a base station, a radio resource management device configured to control the base station, and the like. The first network device 101 and the second network device 103 may further include a relay station (relay device), an access point, a base station or an NR base station in a 5G network, a base station in a future evolved PLMN network, and the like. The first network device 101 and the second network device 103 may be wearable devices or vehicle-mounted devices. The first network device 101 and the second network device 103 may alternatively be communication chips having communication modules.

For example, the first network device 101 and the second network device 103 include but are not limited to a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN), a base station controller (base station controller, BSC), a home base station (for example, a home evolved NodeB or a home NodeB, HNB), a baseband unit (baseBand unit, BBU), a transmitting and receiving point (transmitting and receiving point, TRP), a transmitting point (transmitting point, TP), a mobile switching center, or may be an evolved (evolutional) NB (eNB or eNodeB) in LTE, or may be a base station device in a 5G network or an access network device in a future evolved PLMN network, or may be a wearable device or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in a radio access network (radio access network, RAN), or the CU may be classified as a network device in a core network (core network, CN). This is not limited in this disclosure. Examples of network devices include, but are not limited to, a NodeB (NodeB or NB), an evolved NodeB (eNodeB or eNB), a next generation NodeB (gNB), a transmitting and receiving point (TRP), a remote radio unit (RRU), a radio head (RH), a remote radio head (RRH), an integrated access and backhaul (IAB, Integrated Access and Backhaul) node, a low power node, such as a femto node, a pico node, a reconfigurable intelligent surface (RIS), a network-controlled repeater, and the like.

In addition, the first network device 101 and the second network device 103 may be connected to a core network (core network, CN) device, and the core network device may be configured to provide a core network service for the first network device 101, the second network device 103, and the terminal device 105. The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), a user plane function (user plane function, UPF), and the like.

Cell (Cell) discontinuous transmission (Discontinuous Transmission, DTX)/discontinuous reception (Discontinuous Reception, DRX) is an effective technique for implementing energy saving of the base station. The base station may configure periodic Cell DTX/DRX for UE in a connected state. Cell DTX/DRX may include an active (active) cycle and a non-active (non-active) cycle. In a DTX/DRX non-active cycle, the base station may not transmit/receive some periodic signals/channels, for example, a UE-specific (UE-specific) signal/channel, to achieve energy saving effect of the base station.

Parameters of Cell DTX/DRX include cycle, start slot or offset (start slot/offset), and on duration (On duration). The parameters of Cell DTX and Cell DRX may be configured together. For example, Cell DTX and Cell DRX may use same time, to simplify system design. Cell DTX and Cell DRX may alternatively be configured separately, to offer flexibility.

FIG. 1B is a diagram of discontinuous transmission of a cell and discontinuous reception of a terminal according to an embodiment of this disclosure. In a scenario 110, before a moment 111, a base station enables cell DTX/DRX. After the moment 111, the base station disables cell DTX/DRX.

Terminal device DRX may be aligned with cell DTX of the base station. For example, in FIG. 1B, DRX on time 115 of a terminal device 1 and DRX on time 117 of a terminal device 2 are within cell DTX on time 113 of the base station, so that the base station does not need to transmit at least a physical downlink control channel (Physical Downlink Control Channel, PDCCH) or a physical downlink shared channel (Physical Downlink Share Channel, PDSCH) in DTX off time other than 113. Therefore, the base station is in an energy saving state within the DTX off time.

Handover between UE DRX and cell DTX/DRX may be indicated by layer 1 (Layer 1, L1) or layer 2 (Layer 2, L2) signaling or a layer 3 (Radio Resource Control, RRC), for example, may be indicated by using PDCCH downlink control information (Downlink Control Information, DCI) signaling of an L1 or media access control (Media Access Control, MAC) control element (Control Element, CE) signaling of an L2. For example, the base station may send L2 or L1 or L1 group (L1 group) signaling to indicate UE to enter or leave a cell DTX/DRX state at a next moment or handover between multiple different cell DTX/DRX configurations/modes.

In embodiments of this disclosure, DTX On is equivalent to DTX active, and corresponds to active time. DTX Off is equivalent to DTX non-active (non-active), and corresponds to non-active time. UE DRX and UE connected mode DRX (Connected Mode DRX, C-DRX) may be interchangeable.

Conditional handover (Conditional Handover, CHO) reduces a probability of handover failures and improves handover reliability. In conventional handover, a source base station delivers a handover command to UE, to indicate the UE to perform handover. CHO enables a source base station to send a handover command to UE in advance, so that the UE autonomously determines to initiate handover execution after finding a base station that meets a handover trigger condition in handover destination candidate base stations. The handover command may include a radio parameter configuration, a handover execution condition, and the like of a destination candidate base station. In this way, a handover success probability may be increased.

CHO can be defined as a handover procedure performed by UE when one or more handover execution conditions are met. After receiving a CHO configuration, the UE starts to perform condition verification. Once handover is performed, the UE stops performing condition verification.

The CHO configuration includes a configuration of a CHO candidate cell generated by the destination candidate base station and a handover execution condition generated by the source base station.

The handover execution condition includes one or two execution conditions, and corresponds to a measurement identifier (MeasID). For example, MeasID may include a CHO event A3 or A5.

In embodiments of this disclosure, the handover execution condition may be defined by using a condExecutionCond-r16 field.

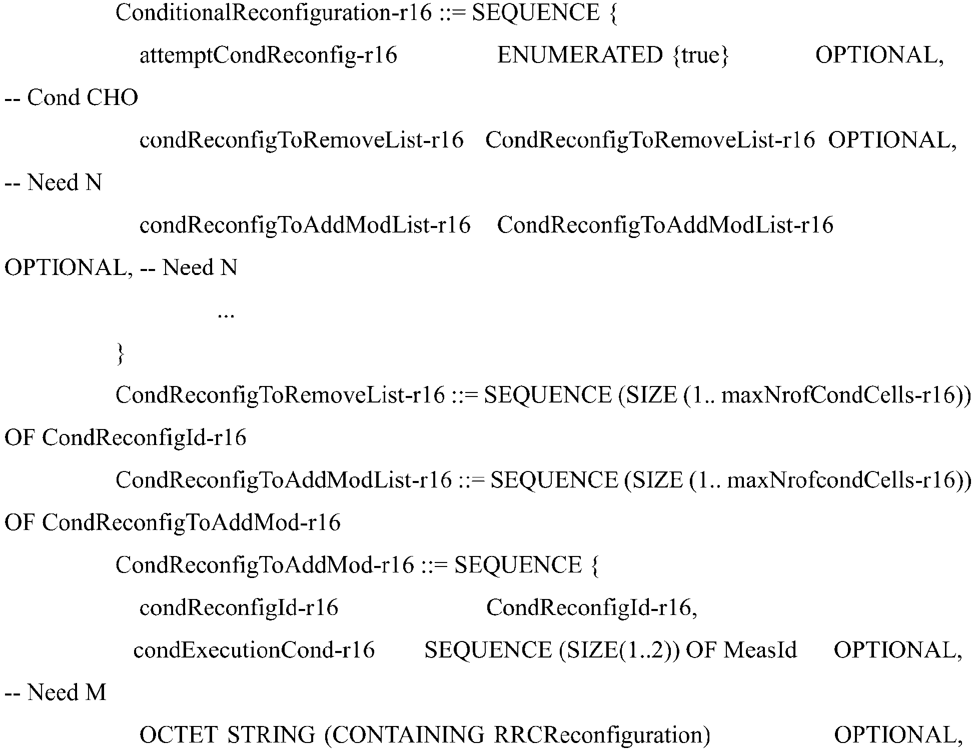

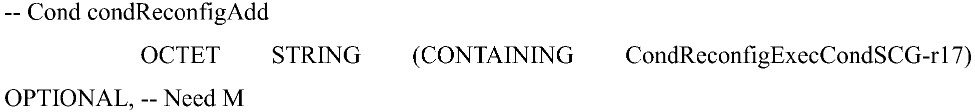

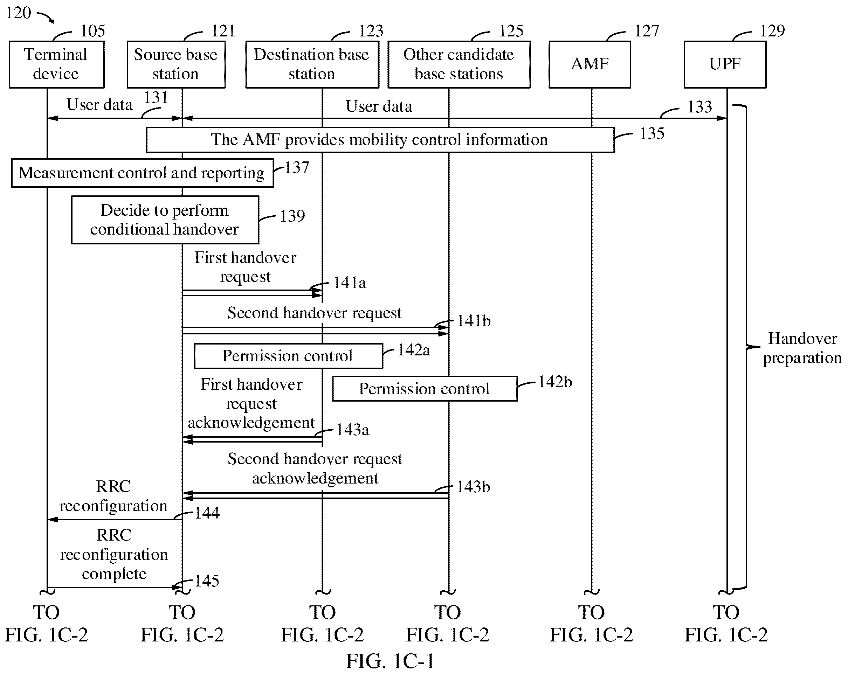

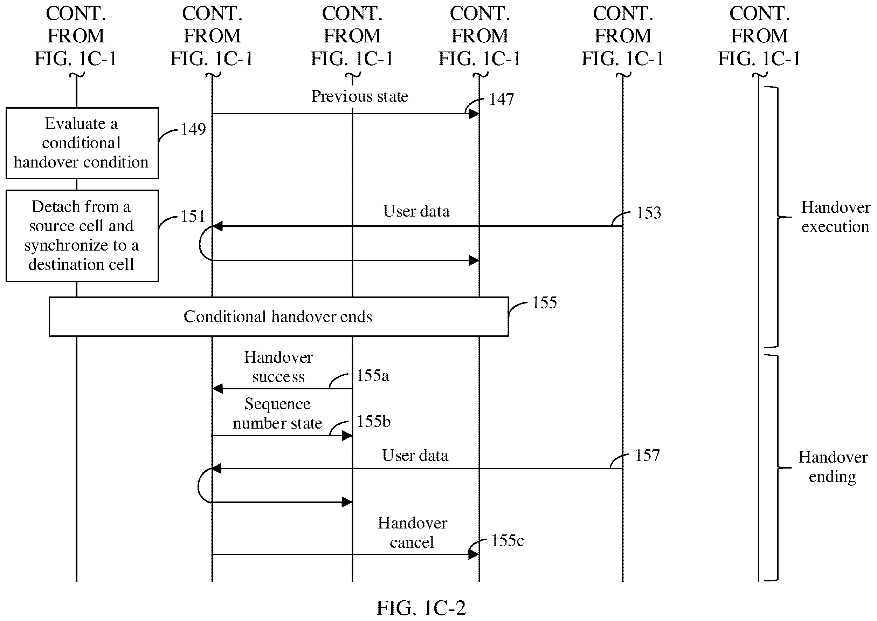

FIG. 1C-1 and FIG 1C-2 are a schematic flowchart of conditional handover according to an embodiment of this disclosure. In embodiments of this disclosure, FIG. 1C-1 and FIG 1C-2 specifically show a conditional handover procedure between base stations in an AMF/UPF based on Xn interface communication.

In a procedure 120, there are a terminal device 105, a source base station 121, a destination base station 123, other candidate base stations 125, an access and mobility management function (Access and Mobility Management Function, AMF) 127, and a user plane function (User Plane Function, UPF) 129. The terminal device 105 is the same as the terminal device 105 in FIG. 1A. The source base station 121 may be a specific implementation of the first network device 101 in FIG. 1A, and the destination base station 123 and the other candidate base stations 125 may be specific implementations of the second network device 103 in FIG. 1A. The destination base station 123 and the other candidate base stations 125 may be collectively referred to as "candidate base stations".

In 131, user data is transmitted between the terminal device 105 and the source base station 121. In 133, the user data is transmitted between the source base station 121 and the UPF 129. In 135, the AMF 127 provides mobility control information to the source base station 121, the destination base station 123, and the other candidate base stations 125. In step 137, the terminal device 105 and the source base station 121 perform measurement control and reporting. For example, the terminal device 105 may measure a channel state, and report the channel state to the source base station 121. In 139, the source base station 121 decides to perform conditional handover.

In 141a and 141b, the source base station 121 separately sends a request message for conditional handover, for example, a first handover request 141a and a second handover request 141b, to a plurality of candidate base stations including the destination base station 123 and the other candidate base stations 125. In embodiments of this disclosure, one handover request message may be for one candidate cell. The destination base station 123 and the other candidate base stations 125 each may include a plurality of cells. Therefore, the first handover request 141a and the second handover request 141b are illustrated by using a plurality of arrows. In 142a, the destination base station 123 performs permission control, permits the first handover request, and sends a response message, for example, a first handover response, to the source base station 121 in 143a. The first handover response may include a configuration of a conditional handover candidate cell in the destination base station 123, for example, network energy saving (Network Energy Saving, NES) mode information or an energy saving mode index of the candidate cell. In 142b, the other candidate base stations 125 perform permission control, permits the second handover request, and sends a response message, for example, a second handover response, to the source base station 121 in 143b. The second handover response may include a configuration of a conditional handover candidate cell in the other candidate base stations 125, for example, NES mode information or an energy saving mode index of the candidate cell. In embodiments of this disclosure, one handover response message may be used for one candidate cell. The destination base station 123 and the other candidate base stations 125 each may include a plurality of cells. Therefore, the first handover request 141a and the second handover request 141b are illustrated by using a plurality of arrows.

In 144, the source base station 121 sends a radio resource control RRC reconfiguration message to the terminal device 105, where the radio resource control RRC reconfiguration message includes one or more CHO candidate cells and CHO execution conditions corresponding to the one or more candidate cells. In 145, the terminal device 105 sends an RRC reconfiguration complete message to the source base station 121. In 147, the source base station 121 sends a previous state to the other candidate base stations 125. In 153, the AMF 127 sends the user data to the source base station 121 and the other candidate base stations 125.

After receiving the reconfiguration message in 144, the terminal device 105 continues to maintain a connection to the source base station 121, and evaluates a CHO execution condition for the candidate cell in 149. When at least one CHO candidate cell meets the conditional handover execution condition, the terminal device 105 detaches (Detach) from the source cell in 151, disconnects from the source cell, applies a stored configuration of a target cell selected from the candidate cell, synchronizes to the target cell, for example, synchronizes to a target cell in the destination base station 123, and sends the RRC reconfiguration complete message to the target cell. After successfully completing a handover procedure, the terminal device 105 releases the stored CHO configuration. In 155, the terminal device 105, the source base station 121, the destination base station 123, and the other candidate base stations 125 end conditional handover. Specifically, the destination base station 123 sends a "handover success" message to the source base station 121 in 155a, to notify the source base station 121 that the terminal device 105 has successfully accessed the target cell of the destination base station 123, and the source base station 121 sends a sequence number state to the destination base station 123 in 155b. In 155c, the source base station 121 sends a "handover cancel" message to the other candidate base stations 125, to cancel CHO to the other candidate base stations 125.

Embodiments of this disclosure provides a solution for performing conditional handover in the context of energy saving of a base station. When a candidate cell supports one or more NES modes, indication may be performed between a source base station and a candidate base station and between a base station and a terminal device, to support conditional handover of energy saving sensing. The plurality of energy saving modes may include two states: an NES mode on state and an NES mode off state, or include a plurality of NES modes in an NES mode on state, or include a change between a plurality of NES modes.

After a CHO NES mode of a candidate cell changes, conditional reconfiguration that is being performed by the terminal device 105 is no longer suitable, or needs to be updated to conditional reconfiguration of another NES mode. If a CHO RRC change is triggered after each time a candidate cell triggers an NES mode change, large air interface signaling overheads are caused, effective CHO gains are reduced, and it is difficult to achieve good system energy saving effect. When a candidate base station uses a central unit/distributed unit (CU/DU) architecture, CHO that can support energy saving sensing needs to be considered.

In embodiments of this disclosure, when the source cell of the source base station 121 enables an energy saving mode, or the destination base station 123 and the other candidate base stations 125 enable an energy saving mode, the following scenarios may be considered. After entering the energy saving mode, the source base station 121 expects to hand over the terminal device 105 to a cell of a neighboring base station in a cycle in which DTX/DRX is disabled, to reduce a system load. CHO can be used to improve a handover success rate. In this case, the conditional handover execution condition of the terminal device 105 is related to an NES mode of the source cell.

After the candidate cell enters the NES mode, when configuring the CHO execution condition, the source base station 121 may avoid handing over the terminal device 105 to the candidate cell as much as possible, to avoid a case in which data transmission cannot be performed after handover.

When the source cell and the candidate cell of the source base station support a plurality of NES modes, the base station may dynamically change the NES mode by using L1/L2 signaling, so that the terminal device 105 supports conditional handover of energy saving sensing in the plurality of modes.

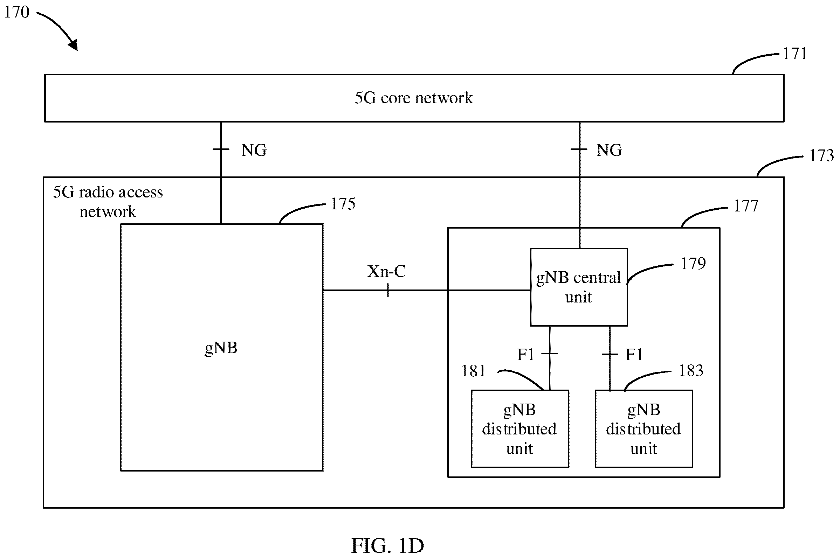

FIG. 1D is a diagram of a base station having a CD/DU architecture according to an embodiment of this disclosure.

In 170, a 5G core network 171 is connected to gNBs 175 and 177 in a 5G radio access network 173 through an NG interface. The gNB 175 may be an implementation of the first network device 101 in FIG. 1A, and the gNB 177 may be an implementation of the second network device 103 in FIG. 1A. The gNB 177 includes a gNB central unit (Centrald Unit, CU) 179 and gNB distributed units (Distributed Unit, DU) 181 and 183. The gNB 175 is connected to the gNB central unit (CU) 179 through an Xn-C interface, and the gNB central unit 179 is separately connected to the gNB distributed units 181 and 183 through F1 interfaces. The gNB central unit is a logical node, and implements functions of radio resource control (Radio Resource Control, RRC), service data adaptation protocol (Service Data Adaptation Protocol, SDAP), and packet data convergence protocol (Packet Data Convergence Protocol, PDCP). The gNB distributed unit implements functions of radio link control (Radio Link Control, RLC), media access control (Media Access Control, MAC), and physical layer (Physical Layer, PHY). The gNB distributed unit controls one or more cells, and one cell can belong to only one gNB distributed unit.

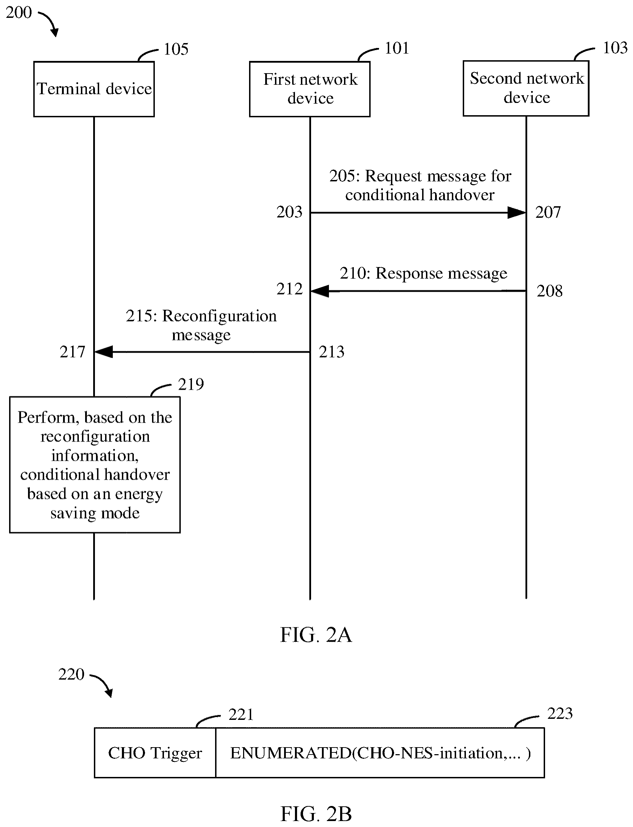

FIG. 2A is a schematic flowchart of using a network energy saving mode in conditional handover according to an embodiment of this disclosure.

In a procedure 200, a first network device 101 sends (203) a request message 205 for conditional handover to a second network device 103. The request message 205 for conditional handover may correspond to a first handover request 141a and a second handover request 141b in FIG. 1C-1 and FIG 1C-2. The request message 205 for conditional handover indicates that conditional handover is triggered by network energy saving. In this way, conditional handover may be triggered in the manner of network energy saving, thereby reducing energy consumption and improving energy utilization efficiency.

After receiving (207) the request message 205 for conditional handover, the second network device 103 sends (208), to the first network device 101, a response message 210 for conditional handover. The response message 210 for conditional handover may correspond to a first handover request acknowledgement 143a and a second handover request acknowledgement 143b in FIG. 1C-1 and FIG 1C-2. The response message 210 includes indication information, and the indication information indicates at least one energy saving mode of a candidate cell of the second network device 103 and at least one piece of configuration information associated with the at least one energy saving mode for conditional handover.

After receiving (212) the response message 210 for conditional handover, the first network device 101 sends (213) a reconfiguration message 215 to the terminal device 105, where the reconfiguration message 215 includes the indication information. The reconfiguration message 215 may correspond to RRC reconfiguration 144 in FIG. 1C-1 and FIG 1C-2. After receiving (217) the reconfiguration message 215, the terminal device 105 performs, based on the reconfiguration message 215, energy saving mode-based conditional handover in step 219. In this way, the energy saving mode of the candidate cell of the second network device 103 may be transmitted to the terminal device 105, so that the terminal device 105 autonomously initiates conditional handover of the energy saving mode, thereby reducing energy consumption, improving energy utilization efficiency, and ensuring a system energy saving requirement. In addition, this avoids the base station triggering a handover procedure for each terminal device when the base station enters or changes the energy saving state, thereby avoiding signaling overheads and signaling storms. A person of ordinary skill in the art may understand that the first network device 101 may directly receive the response message 210 for conditional handover from the second network device 103, or may receive the response message 210 for conditional handover from the second network device 103 via a core network or a relay device. This is not limited in this disclosure.

FIG. 2B is a diagram of a conditional handover indication triggered by network energy saving according to an embodiment of this disclosure.

A conditional handover indication 220 indicates, for example, the second network device 103 of the destination base station, that a conditional handover request is triggered by energy saving of the base station. The conditional handover indication 220 may include a conditional handover trigger (CHO Trigger) 221 and configuration information ENUMERATED (CHO-NES-initiation, ...) of an enumeration type.

In embodiments of this disclosure, a specific implementation of the energy saving mode in the indication information includes cell discontinuous transmission (DTX) and cell discontinuous reception (DRX). Cell discontinuous transmission DTX may include cycle, offset, and duration. Cell discontinuous reception DRX may also include cycle, offset, and duration. In the plurality of energy saving modes, there may be a plurality of cell DTX/DRX modes, and different cell discontinuous transmission reception modes may have different cycles, offset, or duration. The energy saving mode may also include an energy saving state, for example, off (off), deep sleep (deep sleep), normal sleep (normal sleep), slight sleep (slight sleep), or on (on). The energy saving mode may also include a cell load state, for example, 0%, 20%, 40%, 60%, or 80%. Therefore, the energy saving mode may be represented in a plurality of manners, to adapt to different application scenarios and have flexibility. In embodiments of this disclosure, in one or more energy saving modes, the energy saving mode in the indication information may be indicated by using an energy saving mode index. For example, in a plurality of cell DTX/DRX modes, an index of a first cell DTX/DRX mode is 0, an index of a second cell DTX/DRX mode is 1, and so on. For another example, in the plurality of cell DTX/DRX modes, one energy saving mode index is associated with one cell DTX/DRX mode. A person of ordinary skill in the art may understand that the energy saving mode may further include other modes, and the energy saving state and the cell load state may further include other values. This is not limited in this disclosure.

In embodiments of this disclosure, the current energy saving mode of the source cell of the first network device 101 may be specifically identified by using cell DTX, cell DRX, the energy saving state, or the cell load state, or may be identified by using the energy saving mode index (index). For example, the second network device 103 of the destination base station performs interaction based on an energy saving mode of node interaction, and may obtain an energy saving mode configuration of the source cell of the first network device 101 based on the index. In embodiments of this disclosure, the indication information may further include a quantity of energy saving modes supported by the source cell of the first network device 101 and a configuration of each energy saving mode. A specific implementation of the energy saving mode is described above. In this way, the second network device 103 can conveniently obtain the energy saving mode of the source cell of the first network device 101.

In embodiments of this disclosure, when the second network device 103 is in a CU/DU split architecture shown in FIG. 1D. After receiving the request message 205 including the indication information in FIG. 2A, the CU of the second network device 103 sends a terminal context setup request message to the DU. The terminal context setup request message includes indication information. The DU sends a terminal context setup response message to the CU, where the terminal context setup response message includes NES modes of cells of one or more DUs and DU configuration information corresponding to an NES mode.

In embodiments of this disclosure, the NES mode of the cell of the DU and the DU configuration information corresponding to the NES mode may be implemented as a current NES mode of a candidate cell of the DU and a corresponding cell group configuration (CellGroupConfig). In embodiments of this disclosure, the NES mode of the cell of the DU and the DU configuration information corresponding to the NES mode may alternatively be implemented as: all NES modes supported by the candidate cell of the DU and a corresponding cell group configuration (CellGroupConfig), that is:

```
         Candidate cell NES mode 1, CellGroupConfig 1
         Candidate cell NES mode 2, CellGroupConfig 2
         ...
```

In embodiments of this disclosure, the NES mode of the cell of the DU and the DU configuration information corresponding to the NES mode may alternatively be implemented as a non-NES mode of the candidate cell and CellGroupConfig 1. In embodiments of this disclosure, the NES mode may also include a non-energy saving mode.

In embodiments of this disclosure, a cell group configuration may be implemented as a distributed unit configuration.

In embodiments of this disclosure, the NES mode of the cell of the DU and the DU configuration information corresponding to the NES mode may alternatively be implemented as follows: The current NES mode of the candidate cell is indicated based on all NES modes supported by the candidate cell of the DU. In embodiments of this disclosure, in a CU/DU architecture, the DU may notify the CU of a change of the NES mode, and then the CU notifies the terminal device 105 of the change by using the source cell of the first network device 101.

In embodiments of this disclosure, the reconfiguration message includes the identification information of the first energy saving mode of the source cell of the first network device 101. The reconfiguration message may further include identification information of a second energy saving mode of the candidate cell of the second network device 103. The reconfiguration message may further include a conditional execution condition associated with one or both of the first energy saving mode and the second energy saving mode. The reconfiguration message may further include the configuration information associated with the conditional execution condition. In this way, the terminal device 105 may obtain the complete configuration information and conditional execution condition related information of the first network device 101 and the second network device 103, so that the terminal device 105 accurately implements conditional handover of the energy saving mode.

In embodiments of this disclosure, the response message 210 in FIG. 2A includes one or more NES modes of the candidate cell of the second network device 103 and configuration information for conditional handover that is associated with the NES mode. The configuration information may include conditional RRC reconfiguration including the cell group configuration. That is, the one or more NES modes and the configuration information for conditional handover that is associated with the NES mode and that is used for conditional handover may be implemented as follows:

```
         A NES mode 1 of the candidate cell includes a RRCReconfiguration condition of Cell
 GroupConfig1.
         A NES mode 2 of the candidate cell includes a RRCReconfiguration condition of Cell
 GroupConfig2.
         ...
```

In embodiments of this disclosure, the NES mode of the candidate cell and the conditional reconfiguration information corresponding to the NES mode may also be implemented as a non-NES mode of the candidate cell and CellGroupConfig 1 of the non-NES mode. In embodiments of this disclosure, the NES mode may also include a non-energy saving mode.

In embodiments of this disclosure, a cell group configuration may be implemented as a distributed unit configuration.

In embodiments of this disclosure, the NES mode may be implemented as an NES mode index corresponding to the NES mode. The NES index is a value of an NES mode sequence (sequence) in ascending order. For example, in one or more NES modes, a value of an index corresponding to a first NES mode is 0, a value of an index corresponding to a second NES mode is 1, and so on. For another example, one NES mode index is associated with one NES mode. For example, the configuration information may include conditional RRC reconfiguration including the cell group configuration. That is, the one or more NES mode indexes and the configuration information that is associated with the NES mode index and that is used for conditional handover may be implemented as follows:

```
         A NES mode index 1 of the candidate cell includes a RRCReconfiguration condition
 of Cell GroupConfig1.
         A NES mode index 2 of the candidate cell includes a RRCReconfiguration condition
 of Cell GroupConfig2.
         ...
```

In this way, the NES mode and the configuration information of the candidate cell of the second network device 102 may be completely transmitted to the first network device 101, to facilitate accurate NES mode conditional handover.

In embodiments of this disclosure, as shown in FIG. 2A, the first network device 101 sends (213) the reconfiguration message 215 such as the RRC reconfiguration message to the terminal device 105. The reconfiguration message 215 may include indication information, and the indication information indicates at least one energy saving mode of the candidate cell of the second network device 103, and at least one piece of configuration information associated with the at least one energy saving mode for conditional handover.

In embodiments of this disclosure, for the candidate cell of the second network device 103, the reconfiguration message 215 may include one or more cell NES modes and target cell conditional RRC reconfiguration associated with the NES mode of the cell.

In some implementations, the reconfiguration message 215 includes identification information of the first energy saving mode of the source cell of the first network device 101. The reconfiguration message 215 may further include identification information of a second energy saving mode of the candidate cell of the second network device 103. The reconfiguration message 215 may further include a conditional execution condition associated with the first energy saving mode and the second energy saving mode. The reconfiguration message 215 may further include configuration information associated with the conditional execution condition. In this way, the cell energy saving mode of the first network device 101, the cell energy saving mode of the second network device 103, the conditional handover execution condition, and the configuration information associated with the conditional execution condition may be completely configured for the terminal, so that the terminal device 105 autonomously implements conditional handover based on network energy saving.

In embodiments of this disclosure, for each candidate cell, a list may be configured for the terminal device 105, and each list element includes: the energy saving mode of the source cell, the energy saving mode of the candidate cell, the measurement identifier, and conditional RRC reconfiguration.

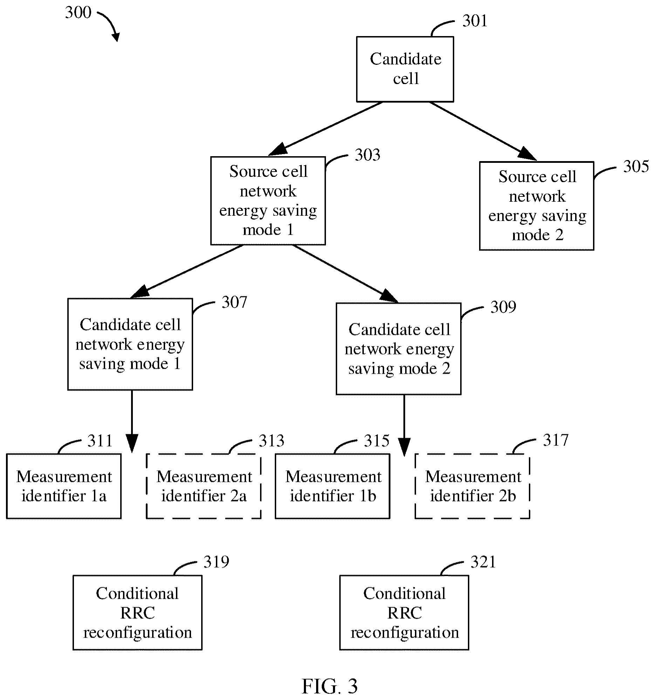

FIG. 3 is a diagram of performing conditional reconfiguration on a terminal by a base station according to an embodiment of this disclosure. In 300, for a candidate cell 301, a list may be configured for the terminal device 105, and list elements include: a source cell network energy saving mode 1 303 and a source cell network energy saving mode 2 305. The source cell network energy saving mode 1 303 corresponds to a candidate cell network energy saving mode 1 307 and a candidate cell energy saving mode 2 309. When the source cell of the first network device 101 has M source cell network energy saving modes, and the candidate cell of the second network device 103 has N candidate cell network energy saving modes, M*N combinations of source cell network energy saving modes and candidate cell network energy saving modes may be generated. The candidate cell energy saving mode 1 307 corresponds to a measurement identifier (MeasID) 1a 311 and/or a measurement identifier 2a 313. The measurement identifier indicates conditional handover events (CHO events) A3 and A5, a reference signal type, trigger quantities (trigger quantities), and the like. When either of the measurement identifier 1a 311 and the measurement identifier 2a 313 is met, the terminal apparatus 105 may perform conditional handover. The measurement identifier 1a 311 and/or the measurement identifier 2a 313 corresponds to conditional RRC reconfiguration 319. The candidate cell energy saving mode 2 309 corresponds to a measurement identifier 1b 315 and a measurement identifier 2b 317. When either of the measurement identifier 1b 315 and the measurement identifier 2b 317 is met, the terminal apparatus 105 may perform conditional handover. Measurement identifiers 1b 315 and 2b 317 correspond to conditional RRC reconfiguration 321. In this way, the cell energy saving mode of the first network device 101, the cell energy saving mode of the second network device 103, the conditional handover execution condition, and the configuration information associated with the conditional execution condition may be completely configured for the terminal, so that the terminal device 105 autonomously implements conditional handover based on network energy saving.

In embodiments of this disclosure, in a possible implementation, different measurement identifiers (measurement ID) are configured for different candidate cell network energy saving modes and/or different source cell network energy saving modes, so that one or more of conditional trigger time, reference signal types, trigger quantities, A3 thresholds or A5 thresholds, and Hysteresis values thereof are different. In another possible implementation, a same measurement identifier (measurement ID) is configured for different candidate cell network energy saving modes. However, for the different network energy saving modes, conditional trigger time, reference signal types, trigger quantities, A3 thresholds or A5 thresholds, and Hysteresis values thereof may be set to different values. For example, an A3 threshold 1 is set for an energy saving mode 1 of the source cell, and an A3 threshold 2 is set for an energy saving mode 2 of the source cell. For another example, an A3 threshold 1 is set for an energy saving mode 1 of the target cell, and an A3 threshold 2 is set for an energy saving mode 2 of the target cell.

In embodiments of this disclosure, the reconfiguration message 215 includes the identification information of the energy saving mode of the cell of the first network device 101. The reconfiguration message may further include the conditional execution condition associated with the first energy saving mode. The reconfiguration message may further include the configuration information associated with the conditional execution condition. In this way, the terminal device 105 may obtain the complete configuration information and conditional execution condition related information of the first network device 101, so that the terminal device 105 accurately implements conditional handover of the energy saving mode.

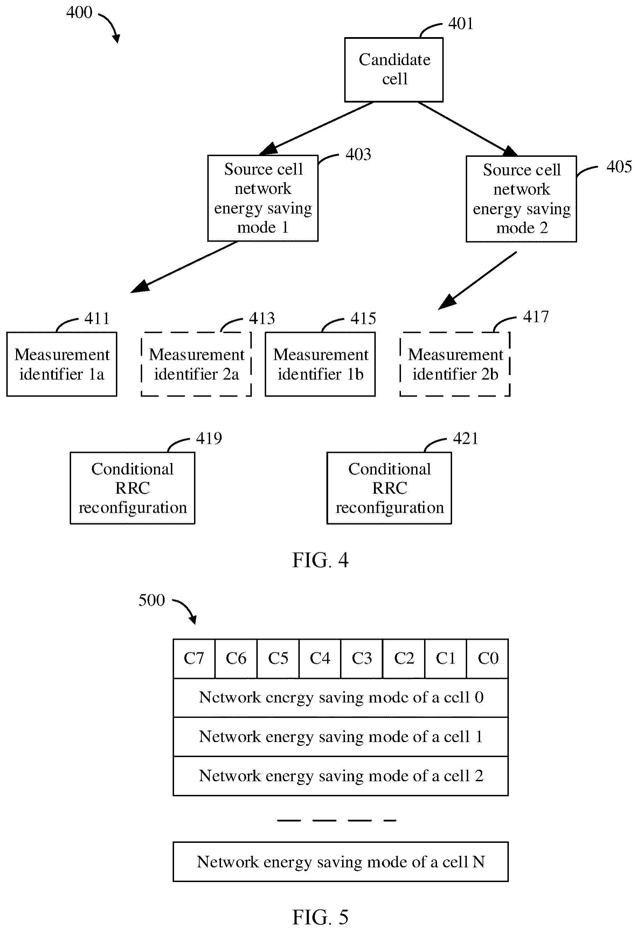

FIG. 4 is a diagram of performing conditional reconfiguration on a terminal by a base station according to another embodiment of this disclosure. In 400, for a current candidate cell 401, a list may be configured for the terminal device 105, and each list element includes: a source cell network energy saving mode 1 403 and a source cell network energy saving mode 2 405. The source cell network energy saving mode 1 403 corresponds to a measurement identifier 1a 411 and a measurement identifier 2a 413. The source cell network energy saving mode 2 405 corresponds to a measurement identifier 1b 415 and/or a measurement identifier 2b 417. The measurement identifier indicates conditional handover events (CHO events) A3 and A5, a reference signal type, trigger quantities (trigger quantities), and the like. When either of the measurement identifier 1a 411 and the measurement identifier 2a 413 is met, the terminal apparatus 105 may perform conditional handover. When either of the measurement identifier 1b 415 and the measurement identifier 2b 417 is met, the terminal apparatus 105 may perform conditional handover. The measurement identifier 1a 411 and the measurement identifier 2a 413 correspond to conditional RRC reconfiguration 419. The measurement identifier 1b 415 and the measurement identifier 2b 417 correspond to conditional RRC reconfiguration 421. In this way, the terminal device 105 may obtain the complete configuration information and conditional execution condition related information of the first network device 101, so that the terminal device 105 accurately implements conditional handover of the energy saving mode.

In embodiments of this disclosure, the reconfiguration message 215 may indicate the current energy saving mode of the source cell. In embodiments of this disclosure, conditional handover may be performed based on a measurement result, and different NES modes may correspond to different measurement identifiers. For example, when the source cell of the first network device 101 is in a light sleep (light sleep) state, and the terminal device 105 is expected to remain in the source cell, a threshold of A5 may be set to a small value. When the source cell is in a deep sleep (deep sleep) state, and the terminal device 105 is expected to be handed over to the candidate cell, the threshold of A5 may be set to a large value. Similarly, for an energy saving state such as off (off), normal sleep (normal sleep), or on (on), the threshold of A5 may be correspondingly adjusted. For another energy saving mode such as a cell load state or cell DTX/DRX, the threshold of A5 or a threshold of A3 may also be correspondingly adjusted. This is not limited in this disclosure.

In embodiments of this disclosure, in a possible implementation, different measurement identifiers (measurement ID) are configured for different network energy saving modes of the source cell, so that one or more of conditional trigger time, reference signal types, trigger quantities, A3 thresholds or A5 thresholds, and Hysteresis values of the network energy saving modes of the source cell are different. In another possible implementation, a same measurement identifier (measurement ID) is configured for different network energy saving modes of the source cell. However, for different network energy saving modes, conditional trigger time, reference signal types, trigger quantities, A3 thresholds or A5 thresholds, Hysteresis values, and the like may be set to different values. For example, an A3 threshold 1 is set for an energy saving mode 1 of the source cell, and an A3 threshold 2 is set for an energy saving mode 2 of the source cell.

In embodiments of this disclosure, in the CU/DU architecture of the second network device 102 shown in FIG. 1D, to enable the CU to accurately generate the NES conditional handover execution condition, an interaction procedure between the CU and the DU may further include the following steps. The CU/DU is in an F1 interface message, for example, an F1 Setup Request or a gNB-DU Configuration Update message. The DU sends, to the CU, an NES mode supported or configured by each cell or a current NES mode of each cell. A specific implementation of the energy saving mode includes cell discontinuous transmission DTX of the DU, and may also include cell discontinuous reception DRX. Cell discontinuous transmission DTX may include cycle, offset, and duration. Cell discontinuous reception DRX may also include cycle, offset, and duration. The energy saving mode may also include an energy saving state, for example, off (off), deep sleep (deep sleep), normal sleep (normal sleep), slight sleep (slight sleep), or on (on). The energy saving mode may also include a cell load state, for example, 0%, 20%, 40%, 60%, or 80%. Therefore, the energy saving mode may be represented in a plurality of manners, to adapt to different application scenarios and have flexibility. A person of ordinary skill in the art may understand that the cell energy saving mode of the DU may further include other modes, and the energy saving state and the cell load state may further include other values. This is not limited in this disclosure.

In embodiments of this disclosure, the first network device 101 further receives, from the second network device 103, an indication of a second energy saving mode for the candidate cell of the second network device 103. Further, the first network device 101 sends the indication of the second energy saving mode for the candidate cell of the second network device 103 to the terminal device 105. The first network device 101 may send, to the terminal device 105, the indication of the second energy saving mode for the candidate cell of the second network device 103 before an evaluation conditional handover condition 149 in FIG. 1C-1 and FIG 1C-2, or may send the indication of the second energy saving mode for the candidate cell of the second network device 103 after the evaluation conditional handover condition 149 in FIG. 1C-1 and FIG 1C-2. In this way, for example, the first network device 101 of the source base station may notify the terminal device 105 of the state of the cell of the second network device 103 of the candidate base station in time, to implement real-time energy saving-based conditional handover and adaptation, thereby facilitating network energy saving.

In embodiments of this disclosure, the indication that is of the second energy saving mode of the candidate cell of the second network device 103 and that is sent by the first network device 101 to the terminal device 105 may be a current energy saving mode to which the second network device 103 is updated from a specific energy saving mode, may be an energy saving mode used when the second network device 103 is initialized, or may be an energy saving mode obtained in another manner. This is not limited in this disclosure.

In embodiments of this disclosure, the first network device 101 sends the indication of the second energy saving mode to the terminal device 105 by using a media access control MAC control element CE, where the MAC CE indicates a candidate cell and a corresponding energy saving mode. The first network device 101 may alternatively send the indication of the second energy saving mode to the terminal device 105 by using layer 1 signaling, where the layer 1 signaling indicates a candidate cell and a corresponding energy saving mode. In this way, for example, the first network device 101 serving as a source base station can more quickly notify the terminal device of the state of the cell of the second network device 103 serving as a candidate base station, to implement real-time energy saving-based conditional handover and adaptation, thereby facilitating network energy saving. In addition, RRC signaling storms are avoided.

In embodiments of this disclosure, when the MAC CE is used, each MAC CE command may indicate a current NES mode of only one candidate cell of the second network device 103. The MAC CE includes a cell ID and a corresponding NES mode. In embodiments of this disclosure, when the MAC CE is used, each MAC CE command may alternatively indicate a current NES mode of one or more candidate cells. In embodiments of this disclosure, the NES mode may be represented as an NES mode index. For example, the NES index is a value of an NES mode sequence (sequence) in ascending order. For example, in one or more NES modes, a value of an index corresponding to a 1^{st} NES mode is 0, a value of an index corresponding to a 2^{nd} NES mode is 1, and so on. For another example, one NES mode index is associated with one NES mode. For example:

```
         NES mode 1, NES mode index 1,
         NES mode 1, NES mode index 2,
         ...
```

FIG. 5 is a diagram of signaling that indicates energy saving modes by using a MAC CE according to an embodiment of this disclosure. In signaling 500, C0 to C7 in the 1^{st} row identify eight candidate cells. Ci=0, (0 ≤ i ≤ 7) indicates that a current NES mode of a candidate cell i does not change. Ci=1 indicates that the current NES mode of candidate cell i changes. When N values in C0 to C7 are 1, there are N rows followed for "network energy saving mode of the cell i", respectively indicating current network energy saving modes of the N updated cells. When C0 to C7 are all 0, it indicates that no NES mode change occurs in any cell, and there are 0 rows followed for "network energy saving mode of the cell i". That is, there is no rows followed for "network energy saving mode of the cell i". When one of C0 to C7 is 1, there is one row for "network energy saving mode of the cell i". When two of C0 to C7 are 1, there are two rows for "network energy saving mode of the cell i". The rest can be deduced by analogy. In this way, the state of the candidate cell can be quickly updated to the terminal device 105 by using the MAC CE. In this way, the conditional handover execution condition can be flexibly indicated, and the terminal device 105 can dynamically perform conditional handover evaluation. This avoids possible handover failures, effectively improves handover performance of the terminal device, and finally ensures energy saving effect of the base station.

In embodiments of this disclosure, when an L1 instruction is used, a cell index (cell index) and a corresponding NES mode index may be indicated in L1 signaling. In embodiments of this disclosure, to indicate the NES mode index, L1 downlink control information (Downlink Control Information, DCI) may include one or more bits, and each bit corresponds to one NES state. When a value of a bit is "1", it indicates that a corresponding current NES mode is activated. However, in a reconfiguration message 215, such as an RRC reconfiguration command, a bit length of the L1 instruction and/or a bit position of each NES mode in the L1 DCI may be indicated. In this way, the state of the candidate cell can be quickly updated to the terminal device 105 by using the L1 instruction. In this way, the conditional handover execution condition can be flexibly indicated, and the terminal device 105 can dynamically perform conditional handover evaluation. This avoids possible handover failures, effectively improves handover performance of the terminal device, and finally ensures energy saving effect of the base station.

In embodiments of this disclosure, when the NES mode of the source cell of the first network device 101 is updated or the current NES mode of the source cell of the first network device 101 needs to be sent, the first network device 101 sends the MAC CE or the L1 instruction and an NES mode update of the source cell to the terminal device 105. In this way, the terminal device 105 updates both the NES mode of the source cell and the NES mode of the candidate cell, so that conditional handover can be accurately performed.

In embodiments of this disclosure, when the energy saving mode of the first network device 101 changes or the current NES mode of the source cell of the first network device 101 needs to be sent, the first network device 101 sends the indication information of the energy saving mode to the terminal device 105. When the energy saving mode of the second network device 103 changes, the first network device 101 also sends the indication information of the energy saving mode to the terminal device 105. The first network device 101 may send the indication information of the energy saving mode to the terminal device 105 before the evaluation conditional handover condition 149 in FIG. 1C-1 and FIG 1C-2, or may send the indication information of the energy saving mode after the evaluation conditional handover condition 149 in FIG. 1C-1 and FIG 1C-2. In this way, the terminal device may be notified of an energy saving mode change of the source base station cell and the candidate base station cell in real time, so that the terminal can accurately implement energy saving conditional handover.

In embodiments of this disclosure, when the energy saving mode of the first network device 101 changes, or when the current NES mode of the source cell of the first network device 101 needs to be sent, the first network device 101 sends the indication information of the energy saving mode to the terminal device 105 in a system message broadcast manner. In this way, the terminal device can be notified of the energy saving mode change of the source base station cell in real time, so that the terminal can accurately implement energy saving conditional handover.

In embodiments of this disclosure, the first network device 101 sends the indication information of the energy saving mode to the terminal device 105, where the indication information indicates to suspend, delete, or resume the configuration information for conditional handover. In this way, configuration information for conditional handover not to be used recently can be shielded, thereby improving accuracy of conditional handover.

In embodiments of this disclosure, the indication information includes an identifier index of conditional reconfiguration. The indication information further includes an indication for suspending or deleting conditional reconfiguration. In this way, configuration information corresponding to an energy saving mode not to be used recently can be accurately shielded, thereby improving accuracy of conditional handover.

In embodiments of this disclosure, when the first network device 101 has configured, for the terminal device 105, the reconfiguration information for conditional handover, and determines to change one or more configurations in conditional handover, the first network device 101 sends dynamic indication information, for example, the MAC CE or the L1 signaling, to the terminal device 105. A condition for sending the dynamic indication may be as follows: The first network device 101 receives the NES mode of the candidate cell of the second network device 103, and finds that a conditional handover configuration configured for the terminal device 105 needs to be suspended or deleted. Alternatively, a condition for sending the dynamic indication may be as follows: The first network device 101 determines to change the NES mode of the source cell, and finds that a conditional handover configuration configured for the terminal device 105 needs to be suspended or deleted. Alternatively, a condition for sending the dynamic indication may be as follows: The first network device 101 finds, based on a cell load or interference state, that a conditional handover configuration configured for the terminal device 105 needs to be suspended or deleted.

In embodiments of this disclosure, the dynamic indication information may include a reconfiguration identifier or index (condReconfigID). The dynamic indication information may also include a pause or deletion indication. After receiving the dynamic indication information, the terminal device 105 may suspend or delete condition verification on the reconfiguration identifier or the index, for example, stop an activated timer.

In embodiments of this disclosure, the indication information includes an identifier of at least one energy saving mode of a cell of the first network device 101. The indication information further includes an identifier of at least one energy saving mode of a cell of the second network device 103. The indication information further includes an indication for suspending or deleting conditional reconfiguration. The indication information further includes an indication of continuing to measure the at least one candidate cell associated with conditional reconfiguration without triggering conditional handover. The indication information further includes an identifier of at least one candidate cell of the second network device 103. In this way, configuration information corresponding to an energy saving mode not to be used recently is accurately shielded, thereby improving accuracy of conditional handover.

In embodiments of this disclosure, the dynamic indication information may include the energy saving mode of the source cell. The dynamic indication information may also include the energy saving mode of the candidate cell. The dynamic indication information may also include a pause or deletion indication. The dynamic indication information may also include a candidate cell ID or a candidate cell index. After receiving the dynamic indication information, the terminal device 105 may suspend or delete conditional verification on the NES mode of the source cell or the NES mode of the candidate cell.

In embodiments of this disclosure, that the terminal device 105 suspends evaluation of the candidate cell may be implemented by the terminal device 105 by deleting the CHO configuration of the candidate cell Alternatively, that the terminal device 105 suspends evaluation of the candidate cell may be implemented by the terminal device 105 by suspending measurement of the target cell. Alternatively, that the terminal device 105 suspends evaluation of the candidate cell may be implemented by the terminal device 105 by continuing to measure the candidate cell, but not triggering CHO. That is, the terminal device 105 is not handed over to the candidate cell.

In embodiments of this disclosure, the first network device 101 sends, to the terminal device 105, an indication used for the following cases: resuming measurement of a cell associated with conditional reconfiguration, and triggering the conditional handover when a conditional handover condition is met. In this way, conditional handover of the cell is accurately restored.

In embodiments of this disclosure, after conditional verification on the specific candidate cell is suspended or deleted, the second network device 103 may further send another piece of dynamic indication information, to indicate the terminal device 105 to resume evaluation of the candidate cell. That the terminal device 105 resumes evaluating the candidate cell may be implemented by the terminal device 105 by continuing to measure the target cell. Alternatively, that the terminal device 105 resumes evaluating the candidate cell may be implemented by the terminal device 105 by triggering CHO. In other words, when the CHO condition is met, the terminal device 105 may be handed over to the candidate cell.

In embodiments of this disclosure, in addition to sending the dynamic indication information to the terminal device 105 by the second network device 103, the terminal device 105 may also determine to suspend evaluation of the candidate cell when the candidate cell enters the NES mode. The terminal device 105 may determine, based on a configuration of the first network device 101, whether the candidate cell enters the "NES mode". For example, the first network device 101 notifies the terminal device 105 of a DTX/DRX configuration of the candidate cell. When the candidate cell is in a DTX/DRX inactive state, the terminal device 105 determines that the candidate cell enters the "NES mode". Alternatively, the terminal device 105 may determine, based on monitoring of the candidate cell by the terminal device 105, for example, detection of a reference signal or a system message of the candidate cell, that the candidate cell enters the "NES mode".

In embodiments of this disclosure, the terminal device 105 may autonomously suspend or delete a conditional handover configuration when the terminal device 105 does not obtain a cell NES mode update of the first network device 101 or a cell NES mode update of the second network device 103 by using the indication information of the energy saving mode.

In embodiments of this disclosure, when receiving, from the second network device, the response message that is used for conditional handover and that does not include the indication information indicates at least one energy saving mode of a candidate cell of the second network device and at least one piece of configuration information associated with the at least one energy saving mode for conditional handover, the first network device 101 may send dynamic indication information, for example, a MAC CE or L1 signaling, to the terminal device 105, to indicate to suspend, delete, or resume the configuration information for conditional handover.

In embodiments of this disclosure, the indication information of the energy saving mode is sent by using the MAC CE. The indication information of the energy saving mode may alternatively be sent by using a combination of layer 1 signaling and an RRC reconfiguration message. In this way, the indication information is sent by using flexible layer 1 and layer 2 signaling, thereby improving efficiency and real-time performance. A person of ordinary skill in the art may understand that the indication information of the energy saving mode may alternatively be sent only by using an RRC reconfiguration message. This is not limited in this disclosure.

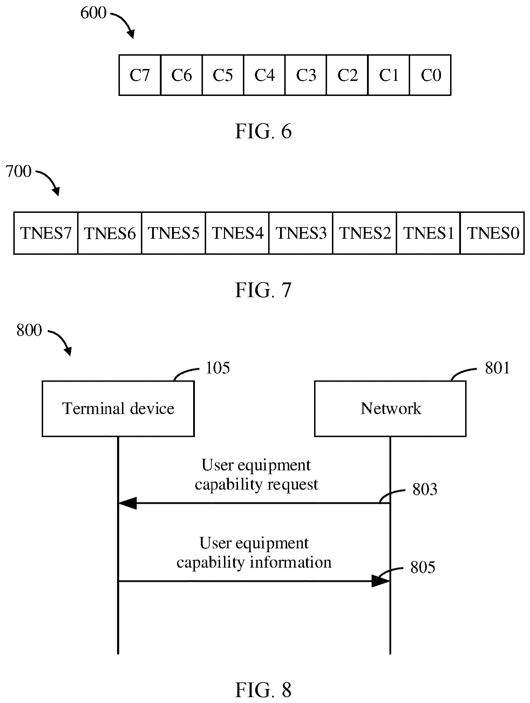

FIG. 6 is a diagram of signaling that indicates energy saving modes by using a MAC CE according to another embodiment of this disclosure. A MAC CE instruction 600 includes C0 to C7, and Ci (0 ≤ i ≤7) is used to indicate to suspend or delete a corresponding conditional RRC configuration or a conditional handover execution condition in a case in which condReconfigID=i. Alternatively, Ci may be used to indicate that corresponding conditional RRC reconfiguration or a conditional handover execution condition remains unchanged in a case in which condReconfigID=i. When a Ci field is set to 0, it indicates the terminal device 105 to suspend or delete conditional RRC reconfiguration or the conditional handover execution condition corresponding to the condReconfigID. When the Ci field is set to 1, it indicates the terminal device 105 to resume conditional RRC reconfiguration or the conditional handover execution condition.

FIG. 7 is a diagram of signaling that indicates energy saving modes by using a MAC CE according to still another embodiment of this disclosure. In a MAC CE instruction 700, TNES (Target Network Energy Saving) i (0 ≤ i ≤7) is used to indicate to suspend or delete an execution condition in which a value of an NES mode index of a candidate cell is i. Alternatively, TNESi is used to indicate that the execution condition in which the value of the NES mode index of the candidate cell is i remains unchanged. i is configured in ascending order of NES modes of the candidate cell. When a TNESi field is set to 0, it indicates the terminal device 105 to suspend or delete a conditional handover execution condition of an NES mode of a corresponding candidate cell. When the TNESi field is set to 1, it indicates the terminal device 105 to resume the conditional handover execution condition of the NES mode of the corresponding candidate cell.

In embodiments of this disclosure, an L1 DCI command includes a 1-bit or multi-bit condReconfigID indication. Each bit corresponds to one condReconfigID. When a value of the bit is "1", it indicates that a corresponding condReconfigID is suspended or deleted. The RRC reconfiguration message may indicate a location, in a condReconfigID indication field of L1, of a bit of each condReconfigID. The RRC reconfiguration message may also indicate a length of corresponding DCI.

In embodiments of this disclosure, based on the updated NES mode, the first network device 101 may dynamically suspend, delete, or resume evaluation of the terminal device 105 on the conditional handover execution condition. In this way, an execution condition of current conditional handover of the terminal device 105 can be quickly enabled or disabled, thereby avoiding possible handover failures. In addition, the dynamic signaling MAC CE or the L1 DCI is used to avoid higher layer RRC signaling overheads. After performing condition resuming, the terminal device 105 may continue to perform condition evaluation.

In embodiments of this disclosure, the first network device 101 may send configuration information to the terminal device 105. The configuration information is used to configure the terminal device 105 to select a candidate cell that is not in an energy saving mode as a target cell for conditional handover when determining that a plurality of candidate cells meet a conditional handover condition. This can avoid using a cell in the energy saving mode as a target cell as much as possible, and improve handover reliability. Alternatively, the terminal device 105 may not be configured based on the configuration information, but autonomously selects the candidate cell that is not in the energy saving mode as the target cell for conditional handover when determining that the plurality of candidate cells meet the conditional handover condition. When selecting the target cell, the terminal device 105 may set priorities for the plurality of candidate cells, and select the target cell based on the priorities.

In embodiments of this disclosure, the first network device 101 may send configuration information to the terminal device 105. The configuration information is used to configure the terminal device 105 to select a candidate cell with a high priority as a target cell for conditional handover when determining that the plurality of candidate cells meet the conditional handover condition. The configuration information includes priorities of target cells, for example:

```
         Candidate cell 1, priority 1
         Candidate cell 2, priority 2
         ...
```

In this way, the terminal device 105 selects the cell with the high priority as the target cell. This improves handover reliability and saves system energy.

In embodiments of this disclosure, when configuring the terminal device 105 to perform conditional handover of the energy saving mode, the first network device 101 and the second network device 103 configure a conditional handover command used for performing network energy saving only for a terminal device 105 having an NES mode capability. Therefore, a network device may sense a capability of the terminal device 105.

FIG. 8 is a schematic flowchart of reporting conditional handover of a network energy saving mode of a terminal according to an embodiment of this disclosure. In a procedure 800, a network 801 may be a specific implementation of the first network device 101.

In the procedure 800, the network 801 sends a user equipment capability request to a terminal device 105 in 803. The terminal device 105 sends user equipment capability information to the network 801 in 805. In the user equipment capability information (UE Capability Information), the terminal device 105 reports, to the network 801, a CHO capability that is supported by the terminal device 105 and that is in a network energy saving condition. A CHO capability under the network energy saving condition may be implemented as follows: The terminal device 105 supports conditional handover of network energy saving, including an energy saving mode, an execution condition, and a candidate cell configuration. The CHO capability under the network energy saving condition may also be implemented as follows: The terminal device 105 supports conditional handover between an FDD source cell in the NES mode and a TDD candidate cell in the NES mode. The CHO capability in the network energy saving condition may also be implemented as follows: The terminal device 105 supports conditional handover between a source cell in an NES mode frequency range (Frequency Range, FR) 1 and a candidate cell in an NES mode FR 2. The CHO capability in the network energy saving condition may also be implemented as: When the candidate cell is configured as a candidate cell for conditional handover in the energy saving state, whether the terminal device 105 supports conditional handover in a handover failure or reestablishment process.

In this embodiment of this disclosure, in addition to obtaining the user equipment capability information from the terminal device 105, the first network device (for example, a base station) may also establish an RRC connection when the terminal device 105 accesses a network. A core network element (for example, an AMF) sends, to the base station in a UE context setup request, the CHO capability under a network energy saving condition.

In this embodiment of this disclosure, in an Xn handover process, the source base station may alternatively send the CHO capability of the terminal device 105 to a destination base station. Alternatively, in an NG handover process, the AMF sends the CHO capability of the terminal device 105 to the destination base station by using a handover request message. In this way, the first network device 101 may configure a handover condition configuration of network energy saving only for the terminal device 105 that supports network energy saving conditional handover, to avoid an incorrect configuration by the base station, thereby implementing conditional handover of the base station in energy saving.

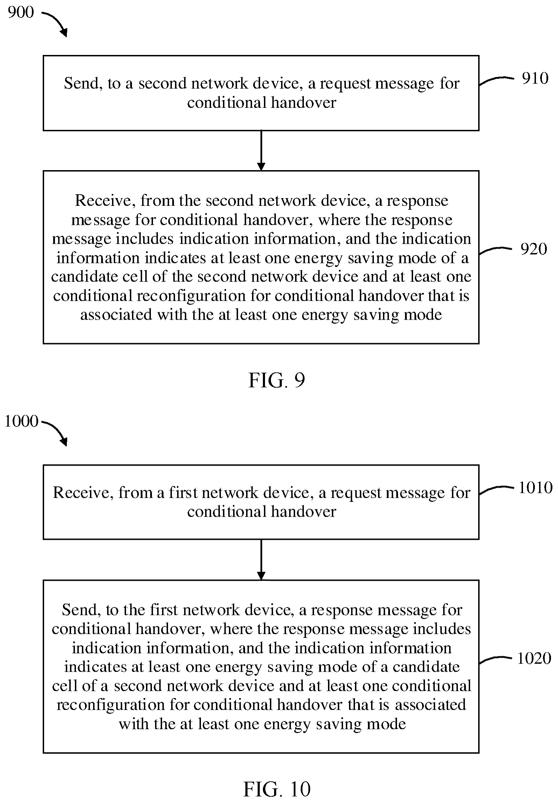

FIG. 9 is a flowchart of a communication method implemented at a first network device according to an embodiment of this disclosure. A procedure 900 corresponds to the communication method implemented by the first network device 101 in FIG. 2A.

In 910, a first network device 101 sends, to a second network device 103, a request message for conditional handover.

In 920, the first network device 101 receives, from the second network device 103, a response message for conditional handover, where the response message includes indication information. The indication information indicates at least one energy saving mode of a candidate cell of the second network device 103 and at least one piece of configuration information associated with the at least one energy saving mode for conditional handover.

In some embodiments, the request message indicates that conditional handover is network energy saving triggered conditional handover. In some embodiments, the energy saving mode includes cell discontinuous transmission DTX. The energy saving mode also includes cell discontinuous reception DRX. The energy saving mode further includes an energy saving state. The energy saving mode further includes a cell load state. In some embodiments, after receiving the response message, the first network device 101 further sends a reconfiguration message to the terminal device 105, where the reconfiguration message includes the indication information.

In some embodiments, the configuration message includes identification information of a first energy saving mode of a source cell of the first network device 101. The configuration message further includes identification information of a second energy saving mode of the candidate cell of the second network device 103. The configuration message further includes a conditional execution condition associated with the first energy saving mode and the second energy saving mode. The configuration message further includes the configuration information associated with the conditional execution condition.

In some embodiments, the reconfiguration message includes identification information of an energy saving mode of a cell of the first network device 101. The reconfiguration message further includes the conditional execution condition associated with the first energy saving mode. The reconfiguration message further includes the configuration information associated with the conditional execution condition.

In some embodiments, the first network device 101 further receives, from the second network device 103, an indication of a second energy saving mode of the candidate cell of the second network device 103. Further, the first network device 101 sends the indication of the second energy saving mode for the candidate cell of the second network device 103 to the terminal device 105.

In some embodiments, the first network device 101 sends the indication of the second energy saving mode to the terminal device 105 in the following manner: a media access control MAC control element CE, where the MAC CE indicates a candidate cell and a corresponding energy saving mode. The first network device 101 sends the indication of the second energy saving mode to the terminal device 105 in the following manner: layer 1 signaling, where the layer 1 signaling indicates a candidate cell and a corresponding energy saving mode.

In some embodiments, the first network device 101 sends the indication information of the energy saving mode to the terminal device 105, where the indication information indicates to suspend, delete, or resume the configuration information for conditional handover. In some embodiments, when the energy saving mode of the first network device 101 and the energy saving mode of the second network device 103 change, the first network device 101 sends the indication information of the energy saving mode to the terminal device 105.

In some embodiments, the indication information includes an identifier index of conditional reconfiguration. The indication information further includes an indication for suspending or deleting conditional reconfiguration. The indication information further includes an indication of continuing to measure the at least one candidate cell associated with conditional reconfiguration without triggering conditional handover. In some embodiments, the indication information includes an identifier of at least one energy saving mode of a cell of the first network device 101. The indication information further includes an identifier of at least one energy saving mode of a cell of the second network device 103. The indication information further includes an indication for suspending or deleting conditional reconfiguration. The indication information further includes an indication of continuing to measure the at least one candidate cell associated with conditional reconfiguration without triggering conditional handover. The indication information further includes an identifier of at least one candidate cell of the second network device 103.

In some embodiments, the indication information of the energy saving mode is sent by using a MAC CE, or may be sent by using a combination of layer 1 signaling and an RRC reconfiguration message.

In some embodiments, the first network device 101 sends, to the terminal device 105, an indication used for the following cases: resuming measurement of a cell associated with conditional reconfiguration, and triggering the conditional handover when a conditional handover condition is met. In some embodiments, the first network device 101 sends configuration information to the terminal device 105, where the configuration information is used to configure the terminal device 105 to select a candidate cell that is not in an energy saving mode as a target cell for conditional handover when determining that a plurality of candidate cells meet a conditional handover condition.

FIG. 10 is a flowchart of a communication method implemented at a second network device according to an embodiment of this disclosure. A procedure 1000 corresponds to the communication method implemented by the second network device 103 in FIG. 2A.

In 1010, the second network device 103 receives, from a first network device 101, a request message for conditional handover.

In 1020, the second network device 103 sends, to the first network device 101, a response message for conditional handover, where the response message includes indication information. The indication information indicates at least one energy saving mode of a candidate cell of the second network device 103 and at least one piece of configuration information associated with the at least one energy saving mode for conditional handover.

In some embodiments, the request message indicates that conditional handover is network energy saving triggered conditional handover. In some embodiments, the energy saving mode includes discontinuous transmission DTX. The energy saving mode further includes discontinuous reception DRX. The energy saving mode further includes an energy saving state. The energy saving mode further includes a cell load state.

In some embodiments, the second network device 103 is a distributed unit of a base station. The distributed unit receives a terminal context setup request message from a central unit of the base station, where the terminal context setup request message includes the indication information. The distributed unit sends a terminal context setup response message to the central unit, where the terminal context setup response message includes an energy saving mode of at least one cell of the second network device 103 and a distributed unit configuration corresponding to the energy saving mode of the cell of the second network device 103. In some embodiments, the distributed unit configuration includes a cell group configuration.

In some embodiments, the terminal context setup response message further includes an energy saving mode index of the cell of the second network device 103. In some embodiments, the second network device 103 sends, to the first network device 101 based on the terminal context setup response message, a response message for conditional handover. In some embodiments, the response message for conditional handover includes the energy saving mode of at least one cell of the second network device 103 and configuration information configured for the distributed unit. The configuration information is sent to the terminal device 105.

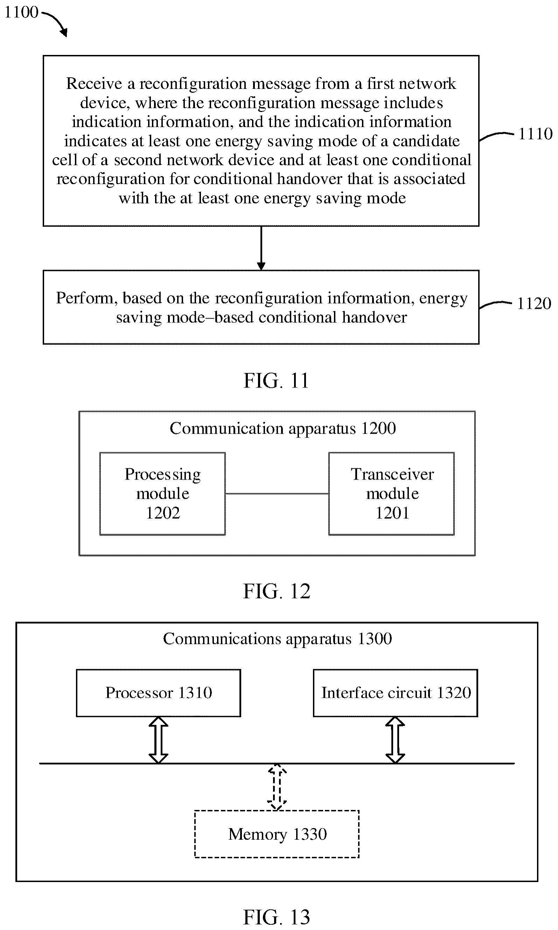

FIG. 11 is a flowchart of a communication method implemented at a terminal device according to an embodiment of this disclosure. A procedure 1100 corresponds to the communication method implemented by the terminal device 105 in FIG. 2A.

In 1110, the terminal device 105 receives a reconfiguration message from a first network device 101, where the reconfiguration message includes indication information. The indication information indicates at least one energy saving mode of a candidate cell of a second network device 103 and at least one piece of configuration information associated with the at least one energy saving mode for conditional handover.

In 1120, the terminal device 105 performs, based on the reconfiguration information, energy saving mode-based conditional handover.

In some embodiments, the reconfiguration message includes an identifier of a first energy saving mode of a source cell of the first network device 101. The reconfiguration message further includes an identifier of the second energy saving mode of the candidate cell of the second network device 103. The reconfiguration message further includes a conditional execution condition associated with the first energy saving mode and the second energy saving mode. The reconfiguration message also includes conditional reconfiguration associated with the conditional execution condition.

In some embodiments, the terminal device 105 further receives indication information of the energy saving mode from the first network device 101, where the indication information indicates to suspend, delete, or resume configuration information for conditional handover. In some embodiments, the terminal device 105 suspends conditional reconfiguration based on at least one of the first network device 101 and the second network device 103 entering the energy saving mode. The terminal device 105 resumes conditional reconfiguration based on at least one of the first network device 101 and the second network device 103 exiting the energy saving mode. In some embodiments, the terminal device 105 selects, based on determining that a plurality of candidate target cells meet a conditional handover condition, a candidate cell that is not in the energy saving mode as a target cell for conditional handover.

In the foregoing embodiments provided in this disclosure, the methods provided in the embodiments of this disclosure are separately described from perspectives of the network device, the terminal device, and interaction between the network device and the terminal device. To implement functions in the methods provided in the foregoing embodiments of this disclosure, the network device and the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 12 and FIG. 13 are diagrams of structures of possible communication apparatuses according to an embodiment of this disclosure. The communication apparatuses may implement a function of the terminal device or the network device in the foregoing method embodiments. Therefore, beneficial effects of the foregoing method embodiments can also be implemented. In this embodiment of this disclosure, a communication apparatus 1200 may be the first network device 101, the second network device 103, and the terminal device 105 shown in FIG. 1A and FIG. 2A.

As shown in FIG. 12, a communication apparatus 1200 includes a transceiver module 1201 and a processing module 1202. The communication apparatus 1200 may be configured to implement a function of the first network device 101 in the method embodiment shown in FIG. 2A.

When the communication apparatus 1200 is configured to implement the function of the first network device 101 in the method embodiment in FIG. 2A, the transceiver module 1201 is configured to send, to the second network device 103, a request message for conditional handover. The transceiver module 1201 is further configured to receive, from the second network device 103, a response message for conditional handover, where the response message includes indication information. The indication information indicates at least one energy saving mode of a candidate cell of the second network device 103 and at least one piece of configuration information associated with the at least one energy saving mode for conditional handover.

When the communication apparatus 1200 is configured to implement the function of the second network device 103 in the method embodiment in FIG. 2A, the transceiver module 1201 is configured to receive, from the first network device 101, a request message for conditional handover. The transceiver module 1201 is further configured to send, to the first network device 101, a response message for conditional handover, where the response message includes the indication information. The indication information indicates at least one energy saving mode of a candidate cell of the second network device 103 and at least one piece of configuration information associated with the at least one energy saving mode for conditional handover.

When the communication apparatus 1200 is configured to implement the function of the terminal device 105 in the method embodiment in FIG. 2A, the transceiver module 1201 is configured to receive a reconfiguration message from the first network device 101. The reconfiguration message includes indication information, and the indication information indicates at least one energy saving mode of a candidate cell of the second network device 103 and at least one piece of configuration information associated with the at least one energy saving mode for conditional handover. The transceiver module 1201 is further configured to perform, based on the reconfiguration information, conditional handover based on an energy saving mode.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions. Optionally, the processor 1310 and the memory 1330 may be integrated into, for example, a system on chip (System on Chip, SOC) or another integrated apparatus. Optionally, the interface circuit 1120 may alternatively be integrated into, for example, a system on chip SOC of a chip, or another integrated apparatus.

When the communication apparatus 1300 is configured to implement the method in the foregoing method embodiments, the processor 1310 is configured to perform a function of the foregoing processing module 1202, and the interface circuit 1320 is configured to perform a function of the foregoing transceiver module 1201.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in embodiments of this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

An embodiment of this disclosure provides a communication system. The communication system may include the remote communication apparatus, the relay communication apparatus, and the communication apparatus in the embodiments shown in FIG. 2A, FIG. 2B, and FIG. 2C, and include the network device in the embodiment shown in FIG. 2B. Optionally, the communication device and the network device in the communication system may perform the communication method shown in any one of FIG. 2A, FIG. 2B, and FIG. 2C.

An embodiment of this disclosure further provides a circuit. The circuit may be coupled to a memory, and may be configured to perform a procedure related to the terminal device or the network device in any one of the foregoing method embodiments. A chip system may include a chip, and may further include another component like a memory or a transceiver.

It should be understood that the processor mentioned in embodiments of this disclosure may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in the embodiments of this disclosure may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this disclosure. The execution sequences of the processes should be determined based on functions and internal logic of the processes, and should not be construed as any limitation on the implementation processes of the embodiments of this disclosure.

It is to be aware that, in combination with examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this disclosure.

It may be clearly understood that, for the purpose of convenient and brief description, for a specific working process of the foregoing systems, apparatuses, and modules, refer to a corresponding process in the foregoing method embodiments. Details are not described herein again.

In the several embodiments provided in this disclosure, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in the embodiments of this disclosure may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on this understanding, the technical solutions of this disclosure may essentially or contribute to the technical solutions or a part of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this disclosure. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this disclosure, but are not intended to limit the protection scope of the embodiments of this disclosure. Any variation or replacement readily figured out by a person skilled in the art within the technical scope disclosed in embodiments of this disclosure shall fall within the protection scope of embodiments of this disclosure.

## Claims

1. A communication method, comprising:
determining a radio resource control RRC reconfiguration message, wherein the RRC reconfiguration message comprises identification information of an energy saving mode of a source cell and configuration information associated with the energy saving mode and a conditional execution condition, and the energy saving mode of the source cell comprises at least one of the following: cell discontinuous transmission DTX, cell discontinuous reception DRX, or cell shutdown; and
sending the radio resource control RRC reconfiguration message.

2. The method according to claim 1, wherein the configuration information associated with the conditional execution condition comprises a measurement identifier, the measurement identifier is associated with the energy saving mode of the source cell, and the measurement identifier indicates a conditional handover event, a reference signal type, and a trigger quantity.

3. The method according to claim 2, wherein the conditional handover event is an A3 event or an A5 event.

4. The method according to any one of claims 1 to 3, wherein the method further comprises:
sending indication information of the energy saving mode, wherein the indication information indicates that the energy saving mode of the source cell is updated or the source cell enters the energy saving mode; and
indicating to perform conditional handover evaluation.

5. The method according to claim 4, wherein the indication information is carried in layer 1 signaling.

6. A communication method, comprising:
receiving a radio resource control RRC reconfiguration message, wherein the RRC reconfiguration message comprises identification information of an energy saving mode of a source cell and configuration information associated with the energy saving mode and a conditional execution condition, and the energy saving mode comprises at least one of the following: cell discontinuous transmission DTX, cell discontinuous reception DRX, or cell shutdown; and
performing, based on the RRC reconfiguration message, energy saving mode-based conditional handover.

7. The method according to claim 6, wherein the configuration information associated with the conditional execution condition comprises a measurement identifier, the measurement identifier is associated with the energy saving mode of the source cell, and the measurement identifier indicates a conditional handover event, a reference signal type, and a trigger quantity.

8. The method according to claim 7, wherein the conditional handover event is an A3 event or an A5 event.

9. The method according to any one of claims 6 to 8, wherein the method further comprises:
receiving indication information of the energy saving mode, wherein the indication information indicates that the energy saving mode of the source cell is updated or the source cell enters the energy saving mode.

10. The method according to claim 9, wherein the indication information is carried in layer 1 signaling.

11. The method according to any one of claims 6 to 10, wherein the configuration information associated with the conditional execution condition comprises a first measurement identifier and/or a second measurement identifier, and the first measurement identifier and/or the second measurement identifier are/is associated with the energy saving mode of the source cell; and
the performing, based on the RRC reconfiguration message, energy saving mode-based conditional handover comprises:
performing, based on the first measurement identifier and/or the second measurement identifier, energy saving mode-based conditional handover.

12. The method according to claim 11, wherein the configuration information associated with the conditional execution condition comprises the first measurement identifier and the second measurement identifier; and
the performing, based on the first measurement identifier and/or the second measurement identifier, energy saving mode-based conditional handover comprises:
performing energy saving mode-based conditional handover when either of the first measurement identifier and the second measurement identifier is met.

13. A communication method, comprising:
sending, to a second network device by a first network device, a request message for conditional handover; and
receiving, from the second network device by the first network device, a response message for conditional handover, wherein the response message comprises indication information, and the indication information indicates at least one energy saving mode of a candidate cell of the second network device and at least one piece of configuration information associated with the at least one energy saving mode for conditional handover.

14. The method according to claim 13, wherein the request message indicates that:
conditional handover is network energy saving triggered conditional handover.

15. The method according to claim 13, wherein the energy saving mode comprises at least one of the following:
cell discontinuous transmission DTX and/or cell discontinuous reception DRX;
an energy saving state; or
a cell load state.

16. The method according to claim 13, further comprising:
sending, by the first network device, a reconfiguration message to a terminal device after receiving the response message, wherein the reconfiguration message comprises the indication information.

17. The method according to claim 16, wherein the reconfiguration message comprises at least one of the following:
identification information of a first energy saving mode of a source cell of the first network device;
identification information of a second energy saving mode of the candidate cell of the second network device;
a conditional execution condition associated with the first energy saving mode and/or the second energy saving mode; or
configuration information associated with the conditional execution condition.

18. The method according to claim 16, wherein the reconfiguration message comprises at least one of the following:
identification information of an energy saving mode of a cell of the first network device;
a conditional execution condition associated with the first energy saving mode; or
configuration information associated with the conditional execution condition.

19. The method according to claim 13, further comprising:
receiving, from the second network device by the first network device, an indication of a second energy saving mode of the candidate cell of the second network device; and
sending, to a terminal device by the first network device, the indication of the second energy saving mode for the candidate cell of the second network device.

20. The method according to claim 19, wherein the first network device sends the indication of the second energy saving mode to the terminal device by using at least one of the following:
a media access control MAC control element CE, wherein the MAC CE indicates the candidate cell and a corresponding energy saving mode; or
layer 1 signaling, wherein the layer 1 signaling indicates the candidate cell and a corresponding energy saving mode.

21. The method according to any one of claims 13 to 20, further comprising:
sending, by the first network device, the indication information of the energy saving mode to the terminal device, wherein the indication information indicates to suspend, delete, or resume the configuration information for conditional handover.

22. The method according to claim 21, wherein comprising:
when an energy saving mode of the first network device and/or an energy saving mode of the second network device change/changes, sending, by the first network device, the indication information of the energy saving mode to the terminal device.

23. The method according to claim 21 or 22, wherein the indication information comprises at least one of the following:
an identifier index of conditional reconfiguration;
an indication of suspending or deleting conditional reconfiguration; or
an indication of continuing to measure at least one candidate cell associated with conditional reconfiguration without triggering conditional handover.

24. The method according to claim 21 or 22, wherein the indication information comprises at least one of the following:
an identifier of at least one energy saving mode of the cell of the first network device;
an identifier of at least one energy saving mode of a cell of the second network device;
an indication of suspending or deleting conditional reconfiguration;
an indication of continuing to measure at least one candidate cell associated with conditional reconfiguration without triggering conditional handover; or
an identifier of at least one candidate cell of the second network device.

25. The method according to claim 21 or 22, wherein the indication information of the energy saving mode is sent by using at least one of the following:
the MAC CE; or
a combination of the layer 1 signaling and the RRC reconfiguration message.

26. The method according to claim 21 or 22, further comprising:
sending, by the first network device to the terminal device, an indication for at least one of the following: resuming measurement of a cell associated with conditional reconfiguration; or triggering conditional handover when a conditional handover condition is met.

27. The method according to claim 13, further comprising:
sending, by the first network device, configuration information to the terminal device, wherein the configuration information is used to configure the terminal device to select a candidate cell not in an energy saving mode as a target cell for conditional handover when determining that a plurality of candidate cells meet a conditional handover condition.

28. A communication method, comprising:
receiving, from a first network device by a second network device, a request message for conditional handover; and
sending, to the first network device by the second network device, a response message for conditional handover, wherein the response message comprises indication information, and the indication information indicates at least one energy saving mode of a candidate cell of the second network device and at least one piece of configuration information associated with the at least one energy saving mode for conditional handover.

29. The method according to claim 28, wherein the request message indicates that:
conditional handover is network energy saving triggered conditional handover.

30. The method according to claim 28, wherein the energy saving mode comprises at least one of the following:
discontinuous transmission DTX and/or discontinuous reception DRX;
an energy saving state; or
a cell load state.

31. The method according to claim 28, wherein the second network device is a distributed unit of a base station, and the method further comprises:
receiving, by the distributed unit, a terminal context setup request message from a central unit of the base station, wherein the terminal context setup request message comprises the indication information; and
sending, by the distributed unit, a terminal context setup response message to the central unit, wherein
the terminal context setup response message comprises an energy saving mode of at least one cell of the second network device and a distributed unit configuration corresponding to the energy saving mode of the cell of the second network device.

32. The method according to claim 31, wherein the distributed unit configuration comprises a cell group configuration.

33. The method according to claim 31, wherein the terminal context setup response message further comprises:
an energy saving mode index of the cell of the second network device.

34. The method according to claim 31, further comprising:
sending, to the first network device by the second network device based on the terminal context setup response message, a response message for conditional handover.

35. The method according to claim 34, wherein the response message for conditional handover comprises:
an energy saving mode of at least one cell of the second network device, and configuration information comprising the distributed unit configuration; and
the configuration information is sent to a terminal device.

36. A communication method, comprising:
receiving, by a terminal device, a reconfiguration message from a first network device; and
performing, by the terminal device based on the reconfiguration information, conditional handover based on an energy saving mode, wherein
the reconfiguration message comprises indication information, and the indication information indicates at least one energy saving mode of a candidate cell of a second network device and at least one piece of configuration information associated with the at least one energy saving mode for conditional handover.

37. The method according to claim 36, wherein the reconfiguration message comprises at least one of the following:
an identifier of a first energy saving mode of a source cell of the first network device;
an identifier of a second energy saving mode of the candidate cell of the second network device;
a conditional execution condition associated with the first energy saving mode and/or the second energy saving mode; or
conditional reconfiguration associated with the conditional execution condition.

38. The method according to claim 36, further comprising:
receiving, by the terminal device, indication information of an energy saving mode from the first network device, wherein the indication information indicates to suspend, delete, or resume configuration information for conditional handover.

39. The method according to claim 38, further comprising:
suspending, by the terminal device, conditional reconfiguration based on the second network device entering the energy saving mode and/or the first network device entering the energy saving mode; and/or
resuming, by the terminal device, conditional reconfiguration based on the second network device exiting the energy saving mode and/or the first network device exiting the energy saving mode.

40. The method according to claim 36, further comprising:
selecting, by the terminal device based on determining that a plurality of candidate target cells meet a conditional handover condition, a candidate cell not in the energy saving mode as a target cell for conditional handover.

41. A first communication apparatus, comprising:
a reconfiguration message determining module, configured to determine a radio resource control RRC reconfiguration message, wherein the RRC reconfiguration message comprises identification information of an energy saving mode of a source cell and conditional configuration information for executing a condition associated with the energy saving mode, and the energy saving mode of the source cell comprises at least one of the following: cell discontinuous transmission DTX, cell discontinuous reception DRX, or cell shutdown; and
a reconfiguration message sending module, configured to send the radio resource control RRC reconfiguration message.

42. A terminal apparatus, comprising:
a reconfiguration message receiving module, configured to receive a RRC reconfiguration message, wherein the RRC reconfiguration message comprises identification information of an energy saving mode of a source cell and a condition configuration message for executing a condition associated with the energy saving mode, and the energy saving mode comprises at least one of the following: cell discontinuous transmission DTX, cell discontinuous reception DRX, or cell shutdown;
a conditional handover module, configured to perform, based on the reconfiguration information, energy saving mode-based conditional handover.

43. A first communication apparatus, comprising:
a sending module, configured to send, to a second communication apparatus, a request message for conditional handover; and
a receiving module, configured to receive, from the second communication apparatus, a response message for conditional handover, wherein the response message comprises indication information, and the indication information indicates at least one energy saving mode of a candidate cell of the second network device and at least one piece of configuration information associated with the at least one energy saving mode for conditional handover.

44. A second communication apparatus, comprising:
a receiving module, configured to receive, from a first communication apparatus, a request message for conditional handover; and
a sending module, configured to send, to the first network device, a response message for conditional handover, wherein the response message comprises indication information, and the indication information indicates at least one energy saving mode of a candidate cell of the second network device and at least one piece of configuration information associated with the at least one energy saving mode for conditional handover.

45. A terminal apparatus, comprising:
a receiving module, configured to receive a reconfiguration message from a first network device; and
a conditional handover module, configured to perform, for the terminal device based on the reconfiguration information, conditional handover based on an energy saving mode, wherein
the reconfiguration message comprises indication information, and the indication information indicates at least one energy saving mode of a candidate cell of a second network device and at least one piece of configuration information associated with the at least one energy saving mode for conditional handover.

46. A computer-readable storage medium, wherein the computer-readable storage medium stores instructions, and when the instructions are executed by an electronic device, the electronic device is caused to perform the method according to any one of claims 1 to 40.

47. A computer program product, wherein the computer program product comprises instructions, and when the instructions are executed by an electronic device, the electronic device is caused to perform the method according to any one of claims 1 to 40.
